# EUROPEAN PATENT SPECIFICATION

(11) **EP 2 408 315 B1**
(45) Date of publication and mention of the grant of the patent: **10.12.2014**
(21) Application number: 10711081.9
(22) Date of filing: 12.03.2010
(51) Int. Cl.: A23B 4/20, A23L 3/34

(54) **A METHOD OF REDUCING THE RATE OF DEGRADATION OF A BIOLOGICAL MATERIAL**
VERFAHREN ZUM VERRINGERN DER ABBAUGESCHWINDIGKEIT EINES BIOLOGISCHEN MATERIALS
PROCÉDÉ DE RÉDUCTION DU TAUX DE DÉGRADATION D'UN MATÉRIAU BIOLOGIQUE

(30) Priority: 20.03.2009 ZA 200902000
(43) Date of publication of application: 25.01.2012
(60) Divisional application: 13169924.1
(73) Proprietor: Bio-Energy Ingredients Limited, Surrey RH7 6LH (GB)
(72) Inventor: HOUSEMAN, Richard, Alwyn, Harrogate Yorkshire HG3 3RH (GB); VENTER, Abraham, Christo, Reading, Berkshire RG1 4AE (GB)
(74) Representative: Selby, David Sean
(86) International application number: PCT/IB2010/051071
(87) International publication number: WO 2010/106475

(56) References cited:
- EP-A1- 0 575 623
- WO-A1-00/67589
- WO-A1-90/10748
- GB-A- 328 547
- GB-A- 191 117 759
- US-A- 4 631 192
- US-A- 5 643 622
- US-A1- 2003 152 689
- US-B1- 6 168 803
- SAWAI J ET AL: "Kinetic analysis of the bactericidal action of heated scallop-shell powder" INTERNATIONAL JOURNAL OF FOOD MICROBIOLOGY, ELSEVIER SCIENCE PUBLISHERS, AMSTERDAM, NL LNKD- DOI:10.1016/S0168-1605(01)00619-5, vol. 71, no. 2-3, 30 December 2001 (2001-12-30), pages 211-218, XP002960770 ISSN: 0168-1605
- DATABASE WPI Week 198203 Thomson Scientific, London, GB; AN 1982-04724E XP002598771 & JP 56 158063 A (SHIMADA-YA HONTEN K) 5 December 1981 (1981-12-05)

## Description

THIS INVENTION relates to an energy efficient method of producing solid, optionally preserved biological materials from wet biological materials or biological by-products and to solid, optionally preserved biological materials produced by the method.

The invention is defined by the claims.

Biological materials which can be used as animal feedstuffs or which can be incorporated in animal feedstuffs are often initially isolated in a pourable, liquid form, for example following extraction, distillation or centrifuge processes. These liquid materials are costly and/or difficult to handle, store and transport and are also subject to degradation through microbial action. Examples of such materials include yeast cream suspensions and yeast cream concentrates produced, for example, by distillation and extraction processes, yeast cell wall suspensions produced, for example, by autolysis and centrifuge processes, liquid betaine extracts, pot ale syrups, stillage and other fermentation solubles produced, for example, by distillation processes, plant extracts and raffinates.

Yeast cell wall (YCW) is obtained through autolising yeast and separation from the soluble yeast extract by centrifugation. The resulting yeast cell wall suspension is typically spray dried or roller dried. Yeast cell wall consists of 30-60 % polysaccharides (beta-glucan and mannan sugar polymers), 15-30 % proteins, 5-20 % lipids and a small amount of chitin. Most of the protein is linked to the Mannan-Oligo-Saccharides (MOS) and is referred to as the Mannoprotein complex. Typically yeast cell wall contains 15-30 % beta-glucan and 15-30 % MOS. Yeast cell wall is a non-specific stimulator of the immune system of both man and animals. Numerous scientific studies have shown that when ingested orally Yeast Beta-Glucan can stimulate the cells of the immune system (macrophages) and help to overcome bacterial infections. Yeast cell wall is also known to act as a mycotoxin binder. Mannan-Oligo-Saccharide (MOS) has been demonstrated to prevent diarrhoea in weaning pigs. MOS binds to pathogenic bacteria in the gut and then carries them through and out of the intestinal tract. MOS also has prebiotic activity and can serve as a nutrient source for the growth of beneficial bacteria in the colon. Yeast cell wall is also applied in the wine industry. Its ability to bind undesirable components allows it to prevent and cure stuck fermentations. Drying yeast cell wall suspensions with a dry matter content of typically 9-12 % is generally difficult and involves spray drying which is expensive. By using the process of the invention yeast cell wall suspensions can be transformed in a liquid-to-solid transformation process into solid materials in an economical and environmentally friendly manner to provide yeast cell wall products as free-flowing powders or granules.

Trimethyl glycine (CAS 107-43-7), or betaine, is a natural product which was originally named betaine after its discovery in sugar beets *(Beta vulgaris*) in the 19th century. This small N-trimethylated amino acid exists as the zwitterion (CH₃)₃N⁺CH₂CO₂⁻ at neutral pH. This substance is often called "glycine betaine" to distinguish it from other betaines that are widely distributed in biological systems. Sugar beet contains 0.2 - 0.3% betaine which is typically extracted using water as eluent to produce liquid betaine. This material can be crystallised to produce a solid betaine product such as betaine hydrochloride (CH₃)₃N⁺CH₂CO₂⁻·HCl. Betaine hydrochloride (CAS 590-46-5) is glycine betaine with a chloride counter-ion and is usually the first crystallised form obtained after extraction from beets. Glycinebetaine occurs naturally in many organisms including several plants. In plants glycinebetaine acts as an osmoprotectant by adjusting the osmotic balance inside the plant cells and tissues. By this natural defence mechanism, glycinebetaine helps plants to overcome the environmental stresses caused by heat, salinity, drought and cold, which are the worst enemies of plant productivity.

Dietary sources of betaine include fish, beets, and legumes. Betaine is most widely available as betaine hydrochloride (betaine-HCl), a non-essential nutrient and source of hydrochloric acid for people with hypochlorhydria (low stomach acid). In particular, betaine hydrochloride is necessary for adequate absorption of protein, calcium, vitamin B₁₂ and iron. Betaine hydrochloride is also an efficient, high-quality and economical nutritional additive promoting growth and widely used for animal, poultry and aquatic breeding. As an efficient methyl supplier, it can partly take the place of methionine and choline chloride, and lowers the cost of feed. Its effective value is said to be 3 times that of DL-methionine and 1.8 times that of 50% choline chloride. It promotes the metabolism of fat, improves the lean meat rate of animal and poultry and the quality of meat, and lowers the ratio of feed and meat. It is an appetite enhancer for animals and makes the feed more agreeable to the taste of animals. It also promotes the growth of poultry and aquatic animals, buffers changes of osmotic pressure and may improve the ability to adapt to changes in the environment such as temperature fluctuations and the survival rate of immature fish and shrimps. Betaine citrate and betaine aspartate have also been used to improve liver function. Crystalline betaine phosphate (betaine-H₃PO₄) is also known from the literature.

Pot Ale Syrup (PAS) is a by-product obtained from the manufacture of malt whisky and mainly comprises yeast cells and residues from malted barley after alcohol has been distilled off the fermented wort at high temperature in copper stills. Wort is the liquid extracted from the mashing process during the brewing of beer or whisky. Wort contains the sugars that are fermented by the brewing yeast to produce ethanol. At several distilleries, Pot Ale Syrup is mixed back with the spent grains (Draff) resulting, after drying, in the production of Distillers Dark Grains.

Other types of biological materials which can be used as animal feedstuffs or which can be incorporated in animal feedstuff can be in the form of wet gums or in a mousse-like form. Wet gums are produced as by-products of the refining of oils extracted from seeds such as rapeseed through a degumming process. The refined oil can be used for biodiesel production. Wet gum is a phospholipid rich material and is problematic in terms of handling, storage and transportation due to its physical characteristics being a non-pourable cream or mousse-like material with a low density. The refined oil is used is used as a starting material for biodiesel production.

Other types of biological materials which can be used as animal feedstuffs or which can be incorporated in animal feedstuffs are fermentation residues. Fermentation residues can contain between about 10% and 90% of free moisture the balance being biomass. The composition of the biomass is determined by the nature of the material fermented. Typically the amount of water or free moisture contained in a fermentation residue will be between about 40% and 90% on a mass to mass basis and more typically between about 70% and 80%. A portion of the water may be contained inside the grains and the amount of free water depends on the physical state of the material.

Fermentation residues arise from the fermentation of grains such as oats, barley, hops or corn, or from the fermentation of syrups such as corn syrups, pot ale syrup, molasses, sugars such as those derived from sugar cane or sugar beet, condensed molasses solubles (CMS), vinasse, starches, amino acids, yeasts or materials derived from the fermentation of cellulosic materials such as wood products or other cellulosic plant material. These residues can for example be produced from bio-ethanol production or from the production of other alcohols. The residues remain after the ethanol has been removed.

Ethanol production from grains employs enzymes produced from yeast. At the start of the process, water is added to grains, and this liquor is cooked and the gelatinised starch is hydrolysed into sugars. The liquor is separated, and the fibrous insolubles are set aside. A selected strain of yeast is added to the liquor containing suspended and dissolved solids of sugars, proteins, nucleotides, yeasts, enzymes, minerals. The warm, thin stillage substrate provides an ideal medium for yeast growth converting most of the carbohydrates present into ethanol. The substrate is then passed through distillation columns and the ethanol is captured for use as a fuel. The remaining ethanol and sugar-free substrate is known as stillage or pot ale syrup depending on the process. Yeasts can be extracted from the stillage as yeast cream which can represent 15% of the dry matter of the post-distillation stillage. Yeast creams can be concentrated for example by serial centrifuge to produce a wet yeast protein concentrate (YPC) as a thin aqueous suspension. YPC is a high value powder nutrient which can be used for feeding to animals such as pigs and ruminants and has human food applications. The yeast extracted post-distillation stillage and any non-yeast extracted stillage is then disposed of by incorporating with the fibrous insolubles (as a carrier) and the wet distiller's and solubles are delivered fresh to local pig and ruminant farms, or dried to produce a feedstuff known as dried distiller's grains and soluble (DDGS). The drying process is usually carried out using rotating drum kiln driers fired by conventional fossil fuels. Drying is necessary as wet distillers grains (WDG) and solubles are highly susceptible to rapid degradation as a result of microbial action. DDGS may also contain high concentrations of mycotoxins which are anti-nutritional and have high sulphur levels which can cause lung function disorders. The high-temperature drying can also reduce the digestibility of amino acids in the DDGS.

In general, prior to use in animal feeds wet biological materials or biological by-products, optionally after blending with other products, have to undergo a drying step in order to preserve them from rapid degradation through microbial action however conventional, uncontrolled, heat drying can be detrimental to the nutritional value of the residues as a result of degradation of proteins at high temperatures. On the other hand without a preservation step such as conventional heat drying, secondary fermentation and other degradation processes occur. These processes render the products unusable in animal feeds. The Applicant has found that, if untreated, degradation of these products commences within a few hours of production and the products are generally unfit for use within about three to seven days. However both blending and conventional heat drying are energy-intensive and expensive processes. Other disadvantages of conventional heat drying include the negative environmental impact thereof, an increase in the concentration of mycotoxin content if mycotoxins are already present, heat-destruction of nutritional components and the need to keep the product dry during storage and transportation in order to avoid degradation through microbial action for example the growth of mycotoxin-producing fungi.

US 5,643,622 discloses a solid animal feed supplement which is prepared in concentrated food industry by-products such as by-products of the dairy industry and by-products of the fermentation industry. The preparation comprises the treatment of protein rich by-products with a mild enzymatic treatment which stabilizes the by-products against protein gelation, and the thermal, and/or enzymatic treatment of lactose-rich by-products to avoid separation of the lactose from concentrates. The by-products can then be concentrated to high solids content, in excess of 50 weight percent, and the resultant concentrates can be treated with gelation agents, preferably phosphoric acid and lime to solidify the by-product.

US 4,631,192 describes a hardened animal feed block formed from dry ingredients including CaO and liquid ingredients including molasses in a continuous flow mixing system under exothermic conditions so as to be discharged at 80° F to 170° F and poured into a container for self-setting without compression forces. The calcium oxide need be present only in limited controlled amounts, and the ingredients and process do not require additional water. The finished block provides desired daily annual consumption of the block nutrients, medicaments, and vitamins.

US 2003/0152689 A1 provides an amorphous solid cast feed product made by solidifying a substantially liquid agricultural by-product. The amorphous solid cast feed product may further include an exogenous source of a carbohydrate, a fat, a vitamin, a mineral, and/or nitrogen, as well as a sulfonated lignin material, a recycled animal waste product, and/or another miscellaneous fibrous material. The substantially liquid agricultural by-product may first be condensed by heat, then solidified by being cooled in a mould.

US 6,168,803 B1 describes a process for preparing animal feed blocks requiring minimum physical compression which consists of adding an aqueous feed mixture to dry or semi-moist nutritive ingredients and at least one alkaline earth metal oxide. The resulting non-pourable and non-pumpable mixture is then transferred to a receiver, such as a mould, and subjected to compression.

WO 00/67589 discloses a method for the preparation of fatty acid calcium salt products in which an admixture is formed of reactive ingredients consisting of (a) a C₁₀-C₂₂ fatty acid mixture having greater than about 45 weight % of the C₁₀-C₂₂ fatty acid content in the form of fatty acid glycerides, and (b) from about 10 to about 30% of the total admixture weight of calcium oxide. Water is then added to the admixture in an amount between about 10% and about 100% by weight relative to the amount of calcium oxide; and the admixture is then heated to a temperature at which the fatty acid glycerides hydrolyze to form fatty acid calcium salts. Rumen bypass feed supplements are also disclosed, as well as ruminant feeds containing the feed supplements and processes for supplying the feed supplements to ruminant animals.

GB 17,759 A describes the manufacture of foodstuffs made by mixing molasses with dry material. In GB 17,759 it is proposed to collect maize shells in the districts where they are grown, and after grinding them into powder, mix them with molasses. The maize husks and molasses can be procured from different localities, shipped to any point and mixed where there is a demand for such food. Other dry foodstuffs in suitable proportions may be added to the mixture, but the basis of this cattle food is a large proportion of ground maize husks. The molasses food must be sterilised to prevent the growth of the fungi or germs, so up to 2% by weight of lime water is mixed in..

EP 0575623 A1 discloses a bactericide and method of retaining freshness of food. The bactericide is prepared by firing oyster shells at 600 to 1,200 °C. When applied to food to which harmful microbes adhere, it can inhibit the growth of the microbes or kill them, thus protecting the food from the microbes.

Sawai J, Shiga H and Kojima H, Int J Food Microbiol, 2001 Dec 30;71(2-3):211-8, provide a kinetic analysis of the bactericidal action of heated scallop-shell powder. Shell powder of scallop (Patinopecten yessoensis) was exposed to heat treatment at between 200 and 1000° C, and the bactericidal action of the powder slurry was investigated. Shell powder heated at 700° C or higher exhibited bactericidal action against Escherichia coli, Salmonella typhimurium, Staphylococcus aureus and Bacillus subtilis (vegetative cells). An increase in exposure temperature enhanced the bactericidal action. The bactericidal action is reported to be due to calcium oxide that is converted from calcium carbonate, which is the main component of the shell powder, by heat treatment. The bactericidal action of the shell powder is greater than that of a NaOH solution of identical pH. Although the pH of the shell powder slurry is high, the slurry was considered to possess other antibacterial mechanisms in addition to that of alkalinity.

JP56158063 A discloses a noodle, particularly Chinese noodle, having good storability without deteriorating the properties, flavour and taste thereof, and containing calcium oxide and/or hydroxide. The calcium oxide or calcium hydroxide or both are contained in a noodle in the following amounts based on 1 kg product: about 6-60mg in an uncooked Chinese noodle, about 2-30mg in a boiled or steamed Chinese noodle, about 5mg or less in an uncooked "udon" (wheat vermicelli) or uncooked "soba" (buckwheat vermicelli) and about 2mg or less in a boiled "udon" or boiled "soba".

WO 90/10748 describes a process for the manufacture of a cellulose-containing product, whereby the whole bio-mass from annual cellulose-producing plants, particularly cereals, is treated with alkali.

GB 328,547 describes a process for preserving meat and fish refuse and the like. The process involves a drying and preserving process of the kind in which a wet material is dried with the assistance of additions of lime, plaster of Paris and the like. The process consists in bringing the water, as far as is required, into the form of water of hydration by the mixture with the material of quick-lime, calcined gypsum or a like dehydrating agent in such a quantity as to yield a practically dry product and thereafter removing the hydrated lime or the like from the dry material by mechanical dry separation. The material so dried has better keeping properties and further water can be removed sufficiently rapidly by evaporating even with inexpensive sources of heat such as waste steam or combustion gases.

There is therefore a requirement for a liquid-to-solid transformation and preservation process to produce solid, preserved materials with improved physical state characteristics, preferably free-flowing particulate materials such as powders or granules. It is therefore an object of the invention to modify such materials, in order to transform their physical properties to improve handling, storage and transportation and as an additional benefit to decrease the rate of, or to prevent, degradation and thereby to impart an extended shelf life to the materials. It is also an object of the invention to preserve the materials without resorting to, or at least substantially reducing, the requirement for conventional heat drying. It is an additional object of the invention to provide a self-sterilising material which does not require storage in a dry environment to avoid bacterial growth and mycotoxin formation through fungal growth.

It is thus an object of the invention to transform liquid or semi liquid biological materials which are difficult to handle, such as solutions, suspensions and emulsions into easy to handle materials such as granular or powdery materials. In particular, it is an object of the invention to transform thick, non-pourable, difficult-to-handle, wet, bio-materials such as gums, mousses, sludges, slurries and pastes, for example wet gums which are produced as a by-product of vegetable oil refining through degumming or wet fermentation residue sludges and the like with a high moisture content, in which a significant portion of the water is present as free water and not contained within the grains, into preserved materials such as free-flowing powders or granules.

In the case of wet, particulate bio-materials such as wet distiller's grains with a high moisture content wherein a significant portion of the water is encapsulated inside the grains into preserved materials, the materials do not necessarily require a transformation of physical state in order to improve handling. It is also an object to combine the above processes.

The invention extends to the treatment of any waste residue stream from bio-fuel production and other fermentative processes.

The invention provides a method selected from sterilising, preserving or both sterilising and preserving a substrate, the method including the step of exposing the substrate to a composition which includes components selected from one or more calcium glyceroxides.

The invention is defined by the claims.

Also forming part of the disclosure is a method of transforming or treating a material which is in an undesirable physical state and/or subject to microbiological degradation through microbial action, the material being useful as an animal feedstuff or for incorporation in an animal feedstuff in order to reduce the rate of the microbiological degradation thereby to improve the physical characteristics and/or extend the shelf life where necessary of the material, the material containing water and the method including the step of adding a suitable base to the material, following pH optimisation thereof if required depending on the pH of the wet starting material, to produce a self-sterilising, preserved material with an extended shelf life and improved physical form.

In the context of this specification, an animal feed product is a product which is selected from products which are useful as animal feedstuffs, products which can be used to produce materials which are useful as animal feedstuffs, products which can be used as components of animal feedstuffs and products which can be used to produce components which can be used in animal feedstuffs. By a "base" is meant a compound or mixture which may be, or may include, a single basic compound or a mixture of different basic compounds.

In the context of this specification, particulate and granular materials include powders, flakes, pellets, grits, crumbs, crumbles, chips, nuts and meal.

Also disclosed is a method of producing an animal feed product from a wet biological material or by-product, the biological material or by-product having a shelf life of between about 1 and 7 days and a physical form selected from solutions, suspensions, emulsions, gums, mousses, sludges, slurries, pastes and particulate materials, and the method including the step of combining the biological material or by-product with a base to produce the animal feed product, the animal feed product having a shelf life which is longer than 7 days and a physical form which is selected from particulate materials, granular materials, powders flakes and the like.

Forming part of the disclosure is a method of reducing the rate of microbiological degradation of a wet biological material, the wet biological material being useful in the manufacture of animal feedstuffs and having a shelf life of between about 1 and 7 days and being selected from solutions, suspensions, emulsions, gums, mousses, sludges, slurries, pastes and particulate materials, the method including the step of adding a base to the wet biological material, to produce a product with a shelf life of more than 7 days.

Preferably the product will have a shelf life of more than about 7 days and more particularly of more than 14 days.

The base may be a calcium monoglyceroxide, calcium diglyceroxide, a higher order glyceroxide or a mixture of any of these substances and may be in a solid form, such as a powder or granule or in solution. These salts hydrolyse in water to produce hydroxyl and/or glyceroxide ions.

The base may thus be a calcium glyceroxide or a mixture of calcium glyceroxides.

The method may include combining a selected weight of the fermentation residue with between about 0.05% and 50% of its weight of the base. The weight of the base will preferably be between about 0.5 % and 25 % and more preferably between about 2 % and 15 %.

The amount of base added is a function of the outcome required and will be determined by the physical properties, including the pH of the starting material and the amount of free water present in the stating material. For example, a starting material with a high water content which is in a pourable, liquid state such as an aqueous suspension of yeast in water, and which may, or may not, be prone to degradation through microbial action, would require a larger amount of base in order to cause an exothermic transformation of liquid to preserved solid material. On the other hand, a wet grain-like, fermentation residue which also has a high water content, but in which most of the water is encapsulated within the grains, and in which the initial physical state is thus acceptable, but which is prone to degradation through microbial action and hence requires preservation only as opposed to both physical transformation and preservation would require less base.

The base may be selected from one or more calcium glyceroxides and may be in a form selected from powders, granules, mixtures thereof and solutions.

The method may include the additional step of treating the wet biological material with at least one acid prior to combining the wet biological material with the base. The acid may be as hereinbefore described. The method may also include the additional step of adding a diluent selected from water, an animal feed compatible material and combinations thereof to the wet biological material. The animal feed compatible material is glycerol.

The wet biological material may be selected from yeast cream suspensions, yeast wall suspensions, liquid betaine extracts, pot ale syrups, distillers' grains, yeast protein concentrates, wet gums, wet distillers' solubles and mixtures of any two or more thereof.

The weight ratio between the wet biological material and the acid may be between about 1:0 and 1:0,9. The weight ratio between the wet biological material and the acid may between about 1:0 and 1:0,5. Where the animal fed compatible material is glycerol, the weight ratio between the wet biological material and the glycerol may be between about 1:0 and 1:2.

The weight ratio between the mixture of calcium glyceroxides and the wet biological material may be between about and 1:5 and 1:100.

The purity of the base is not critical to the method of the invention, but less material would be required in the case of purer bases depending on the nature of impurities present. Various factors may affect the amount of base required. These may include, amongst others, the anticipated microbial exposure and conditions such as storage temperature and humidity levels, the purity of the base, the reactivity of the base, the amount of other non-active substances present in the base, the pH of the fermentation residues, the amount of water present in the fermentation residue, the degree of effective exposure of the base to the free water contained in the residue, the particle (grain) size and state of the residue (*e.g.* intact *versus* shredded) and the degree of mixing. In the case of the metal oxides, the reactivity with free water in the fermentation residue will be determined by the purity and the state of division of the metal oxide, the purer and the more finely-divided the material, the more reactive it will be. The calcium oxide used in the method of the invention will typically have a purity of above 75%. Preferably, the purity will be between about 85% and 100% and more preferably between about 90% and 100%.

The method may include the step of optionally removing at least some of the water from the material, either before or after raising the pH by adding the base. The water may be removed by mechanical or chemical means or by a combination of mechanical and chemical means.

For example the water may be removed by compressing the material, for example by squeezing or pressing the material. Alternatively, where the pH of the material is raised by combining the material with a metal oxide or with a combination of a metal oxide and a metal hydroxide, the amount of the metal oxide or the combination of metal oxide and hydroxide may be selected, so that at least some of the water present in the material reacts with the added metal oxide.

When using a glyceroxide as the base, there is no substantial exothermic reaction with water present in the material. This differs from the case in which the base contains small amounts of oxide. In this case, the oxide reacts with free water to form the corresponding hydroxide and releases an amount of heat which is related to the amount of oxide present. The amount of heat generated is related to the specific amounts of free water and oxide added and the degree of exposure of the oxide to the free water.

It appears that the anti-microbial effect of the base is more important than drying caused by addition of the base (which contributes in the longer term). It appears that the preservation works in the first place by contacting hydroxyl or alkoxide ions (which need to be in solution to enable interaction) depending on substance added with the microorganisms which results in the destruction of the microorganisms. An important feature of the method of the disclosure is that the addition of the base provides a reservoir of anions such as hydroxyl ions and/or glyceroxyl ions which have anti-microbial properties. The addition of the base typically raises the pH of the fermentation residue to a value of above pH 12. This produces a hostile environment in which most micro-organisms cannot survive or multiply. It is an also an advantage of the invention that, through the inhibition of fungal growth and/or killing of fungi, the formation of mycotoxins produced by these organisms is inhibited or eliminated. The Applicant believes that the base may also be able to deactivate existing mycotoxins such as fumonisins through chemical interaction with, and destruction of, the toxins. The anions such as hydroxyl and/or glyceroxyl ions have also been shown to kill pathogenic bacteria such as Salmonella abony, Clostridium difficile, Escherichia coli, and the like. This results in additional benefits in terms of animal health. The metal oxides, metal hydroxides and metal glyceroxides can further be combined with each other and with other preservatives and/or mycotoxin binders to produce a synergistic effect between these groups of additives.

The effective biocide-microorganism contact will be reduced when the material is air dried over time through exposure under certain storage conditions, but the air drying could then become a contributing factor in the preservation process leading to a longer shelf life than expected for chemical treatment only. The method of the disclosure may thus include allowing the treated product at least partially to dry.

The product produced by the method of the disclosure is generally a particulate, fibrous, granular, gum-like, pasty or powdery material.

In preferred embodiments of the invention, the material is selected from yeast cream suspensions, yeast wall suspensions, liquid betaine extracts, pot ale syrups, distillers grains, yeast protein concentrates, wet gums, wet distillers solubles and mixtures of any two or more thereof.

The weight ratio between the calcium glyceroxide or mixture of calcium glyceroxides and the wet biological material may be between about 1:5 and 1:100. The weight ratio between the biological material and the acid may be between about 1:0 and 1:0,9. The weight ratio between the wet biological material and the acid may be between about 1:0 and 1:0,5. The weight ratio between the wet biological material and the glycerol may be about 1:0 and 1:2.

Naturally, the specific weight ratios will be determined by the nature of the wet biological material, the pH of the material and the amount of water which is present in the wet biological material or biological by-product.

The disclosure thus provides a method of using biological materials or by-products such as fermentation residues, in an energy efficient manner, to produce particulate materials which can be used in or as animal feedstuffs.

Also disclosed is an animal feed product prepared by a method as herein described.

The disclosure further provides an animal feedstuff comprising an animal feed product prepared by a method as herein described.

Also disclosed is a method of producing an animal feedstuff comprising the step of combining an animal feed product as hereinbefore described with one or more nutrient components.

The Applicant has found that glyceroxides are effective biocidal or sanitising agents. In particular, the Applicant has found that calcium monoglyceroxide, calcium diglyceroxide, higher order glyceroxides or mixtures of any of these substances, in a solid form, such as a powder or granule or in solution such as an aqueous, alcoholic or aqueous alcoholic solution, are active biocidal and sanitising agents. These salts hydrolyse in water to produce hydroxyl and/or glyceroxide ions which have anti-microbial properties.

The invention thus also provides a method of sterilising a substrate or a surface, the method including the step of exposing the substrate to a composition which includes one or more calcium glyceroxides. The composition may include calcium monoglyceroxide, calcium diglyceroxide, a higher glyceroxide and mixtures thereof.

The composition may be in the form of a solution, a suspension or a concentrate. It will preferably be in the form of a solution of the calcium monoglyceroxide, calcium diglyceroxide, higher glyceroxides or mixture thereof in a solvent such as water or ethanol. The concentration will be determined by the application and will typically be between 1% and 100% of the maximum solubility of the solid substance in water at 5 to 25 degrees Celsius. For example the solubility of calcium diglyceroxide is about 8.35 gram per litre (0.037 molar) in water at *ca* 20 degrees Celsius. The concentration of the calcium diglyceroxide in the aqueous liquid formulation could therefore be between 0.05 gram per litre (0.00037 molar) and 5 gram per litre (0.037 molar) at 20 degrees Celsius.

The substrate may be red meat carcasses, chicken carcasses and eggs, fish, animal bedding materials and the like. Generally the substrate material will be sprayed or painted or dipped in a solution of the composition.

Any material used for animal bedding including bedding for poultry, pigs, cattle, calves, horses, goats, sheep can be sterilised using the method of this aspect of the invention. The materials include but are not limited to wood shavings, straw, sawdust, chopped straw, shredded or chopped, dried bio-materials, flax, shredded paper, any shredded chopped or pellet-like material suitable for use as animal bedding or litter.

For example in broiler chicken houses such materials are spread on the house floor to absorb moisture from droppings. Parasites and infectious microorganisms can survive in the litter and spread infection causing welfare problems, as well as mortality and reduced output efficiency for example slower growth and poorer feed conversion. Further, diseased poultry may produce liquid faeces, with the wet litter also leading to welfare problems and causing downgrading of the poultry carcass with resulting financial costs to the producer.

Metal glyceroxides and mixtures thereof in either solid form for example powder or granules or in liquid form for example as solutions or suspensions in water or ethanol can be used to sterilise this type of material.

These treatment agents are non-toxic and non-sensitising and do not pose problems when ingested. Due to the slow release of for example calcium diglyceroxide in granule form the treatment agent remains active throughout the whole 6 week life of a typical bedding material. No practical treatments exist because all potential products fall foul of one or more of the above issues.

Fish and fish products such as fishmeal are liable to contamination for example from bird droppings when left in the open for example on ships where these are processed or poor processing practices. The main issue is contamination with Salmonella. Fish and fish products are used as ingredients in animal feed and are prone to microbial degradation which reduces the nutrient value and increases the risk of contamination and leads to infection of farm animals and a possible threat to human health. The treatment options are limited as to what could be used as treatment agents as the products are consumed by either fish or animals that will in turn go for human consumption.

Glycerol-derived materials such as calcium glyceroxides in solid form for the treatment of fishmeal is safe to consume and in addition to the anti-microbial properties thereof add energy and calcium therefore not wasting space in the formulation and potentially enhancing the feed ration formulations.

Metal glyceroxides and mixtures thereof in either solid form for example powder or granules or in liquid form for example as solutions or suspensions in water or ethanol can be used for the treatment of fish and fish products.

Pathogenic micro-organisms such as E coli, Salmonella, Campylobacter and Clostridium species are all frequently present on carcasses with clear implications for human health. The main problematic organism per carcass type is typically as follows: pork (Salmonella spp), chicken (Campylobacter spp), beef (Clostridium estertheticum).

Metal oxides, metal hydroxides and metal alkoxides such as metal glyceroxides and mixtures thereof in liquid form for example as solutions or suspensions in water or ethanol can be used for the sterilisation of carcasses.

The invention is now described, by way of example, with reference to the following Examples.

### Example 1 - Comparative Example

### Spent Brewer's Grains

Samples of spent brewer's grains were drawn from the discharge line of a brewery in South Africa. The samples, packed in dry ice in a cold box, were transported over a distance of approximately 40 kilometres to a laboratory. At the laboratory, the samples were thoroughly mixed and initially split into a first portion (Portion 1) and a second portion (Portion 2). The second portion was about twice the size of the first. Portion 1 was left untreated. Material produced from Portion 1 and Portion 2 is designated below using the code "AR" (as received).

Portion 2 was placed on a clean, standard, laboratory screen deck with 1.4mm apertures supported from below. As much water as possible was manually squeezed out with a clean flat plastic disc and the sample was then manually remixed after the squeezing. The squeezed material was then split into a third portion (Portion 3) and a fourth portion (Portion 4) of approximately the same size. Material produced from Portion 3 and Portion 4 is designated below using the code "SQ" (squeezed).

Portion 4 was added to a high speed kitchen food-shredder and shredded for about two minutes. The shredded material was then returned to the 1.4mm aperture screen and squeezed again, as described above, and manually remixed again after the second squeezing to produce a shredded and squeezed portion (Portion 5). Material produced from Portion 5 is designated below using the code "SH" (shredded).

Samples of Portion 1 ("AR"), Portion 3 ("SQ") and Portion 5 ("SH") were then delivered to a microbiological testing facility about 15 kilometres from the treatment laboratory. Each was tested for initial total microbial, yeast and mould counts, respectively.

### Sample treatment

Samples of Portions 1, 3 and 5 were subjected to treatment with varying amounts of a powdered, commercially-available calcium oxide containing approximately 94% calcium oxide (CaO) (as shown in Tables 3, 4 and 5) and stored under insect-proof screens at ambient temperature for seven days. Separate untreated samples were similarly stored under insect-proof screens at ambient temperature for seven days (as shown in Tables 1 and 2). During the trial period the ambient temperature ranged from 11 to 33 degrees C.

### Analysis

The free moisture content on the initial spent brewer's grains was determined to be 78.1% m/m. After exposure to the environment for seven days, all of the samples were tested at a South African National Accreditation System (SANAS) approved microbiological testing facility. Each was tested for total micro-organism, yeast and mould counts to determine the affect of the various treatments. A similar procedure to that described in K.A. Rosentrater et al, Food Bioprocess Technol (2008) was used for the microbiological evaluation.

### Sample appearance

The "7-day" untreated samples were compared visually against the corresponding quicklime-treated samples. All the untreated samples were discoloured, watery and showed evidence of moulds growing on the surface. In addition, they all exuded an unpleasant odour. The treated samples appeared lighter in colour, coarser and grained, had no visible surface moisture and no unpleasant odours. The higher the oxide content, the lighter and drier the samples appeared.

The results are set out in Tables 25-29 below.

### Results

Initial free moisture: 78.1% m/m

**TABLE 25**

| Counts at day 0 (untreated samples) (cfu/g) | | | | | |
|---|---|---|---|---|---|
| **Sample** | **Portion** | **Treatment** | **Plates** | **Yeasts** | **Moulds** |
| 02AR | Portion 1 | None | 108000 | 30 | 20 |
| 02SQ | Portion 3 | Squeezed | 40000 | <0 | <0 |
| 02SH | Portion 5 | Shredded | 36000 | <10 | <10 |

**TABLE 26**

| Counts at day 7 (untreated samples) (cfu/g) | | | | | |
|---|---|---|---|---|---|
| **Sample** | **Portion** | **Treatment** | **Plates** | **Yeasts** | **Moulds** |
| 02AR | Portion 1 | None | 3.00E+8 | 9.8E+05 | 4.6E+04 |
| 02SQ | Portion 3 | Squeezed | 3.00E+8 | 5.38E+05 | 3.8E+05 |
| 02SH | Portion 5 | Shredded | 3.00E+8 | 3.00E+05 | 5.7E+05 |

**TABLE 27**

| Counts at day 7 ("As Received" samples - treated with CaO) (cfu/g) | | | | | | | | |
|---|---|---|---|---|---|---|---|---|
| **Sample** | **Portion** | **Cake (g)** | **CaO (g)** | **Total (g)** | **%CaO** | **Plates** | **Yeasts** | **Moulds** |
| 02AR | Portion 1 | 50.19 | 2.54 | 52.73 | 4.8 | 54000 | 40 | 1160 |
| 02AR | Portion 1 | 50.44 | 5.01 | 55.45 | 9.0 | 8900 | 80 | 170 |
| 02AR | Portion 1 | 50.41 | 7.55 | 57.96 | 13.0 | 350 | <10 | <10 |

**TABLE 28**

| Counts at day 7 ("Squeezed" samples - treated with CaO) (cfu/g) | | | | | | | | |
|---|---|---|---|---|---|---|---|---|
| **Sample** | **Portion** | **Cake (g)** | **CaO (g)** | **Total (g)** | **%CaO** | **Plates** | **Yeasts** | **Moulds** |
| 02SQ | Portion 3 | 50.83 | 2.51 | 53.34 | 4.7 | 470 | <10 | 80 |
| 02SQ | Portion 3 | 50.26 | 7.50 | 57.76 | 13.9 | 150 | <10 | <10 |

**TABLE 29**

| Counts at day 7 ("Shredded" samples - treated with CaO) (cfu/g) | | | | | | | | |
|---|---|---|---|---|---|---|---|---|
| **Sample** | **Portion** | **Cake (g)** | **CaO (g)** | **Total (g)** | **%CaO** | **Plates** | **Yeasts** | **Moulds** |
| 02SH | Portion 5 | 50.00 | 2.58 | 52.28 | 4.9 | 8900 | 10 | <10 |
| 02SH | Portion 5 | 50.19 | 7.57 | 57.76 | 13.1 | 220 | <10 | <10 |

| | | | | | | | | |
|---|---|---|---|---|---|---|---|---|
| cfu = colony forming units Plates = Total plate count | | | | | | | | |

### Conclusions

The untreated "AR" (as received) residue showed significantly higher total microbial counts compared to both the squeezed "SQ" and shredded "SH" samples and there was a general reduction in the total plate count with increasing oxide dosage. Generally, the "AR" samples had higher total plate counts than the similarly calcium oxide - treated "SQ" material at an exposure time to the environment of seven days and, in turn, the "SQ" material had slightly lower total plate counts than the similarly calcium oxide - treated "SH" material.

Based on the total plate count results, the "AR" samples were unfit for animal consumption after seven days in an environment subject to normal daily temperature cycling. The same conclusion could be drawn for both the untreated "SQ" and "SH" samples tested at the same time.

However the treated samples were very different. Treatments with calcium oxide ranged from 4.7% to 13.9% (mass of calcium oxide to mass of spent grains). In every case, "AR", "SQ" and "SH" samples exhibited total plate counts several orders of magnitude lower than the untreated materials. It was clearly evident from the plate counts, lack of odour and appearance of the samples, that the respective treatment processes with calcium oxide had arrested and almost eliminated degradation of the spent brewer's grains.

### Example 2 - Comparative Example

### Damp Grains

The process of Example 1 was followed using damp grains from a whiskey distillery in Scotland. Microbiological evaluation was carried out by an independent Good Laboratory Practice (GLP) laboratory in England and the same testing procedure as that implemented in South Africa in Example 1 and based on the work of K.A. Rosentrater et al, Food Bioprocess Technol (2008) was followed.

A sample of whiskey distiller's grains was drawn from a discharge line in Scotland. The sample, packed in dry ice in a cold box, was transported to a laboratory in Yorkshire. At the laboratory, the sample was split into two equal portions of ca 500 gram each. Portion 1 was left untreated (Sample A).

### Sample treatment

Portion 2 (temperature: 6 degrees Celsius) was manually squeezed and the sample manually remixed (temperature: 10 degrees Celsius). After squeezing the material was then shredded in a high speed kitchen food-shredder for about two minutes to produce a squeezed and shredded residue (temperature 14.3 degrees Celsius).

The material was weighed (410 g) and 41 g (i.e. 10 m/m %) of a powdered, commercially-available calcium oxide containing approximately 94% CaO was thoroughly mixed with the residue in a food mixer to produce Sample B. A rise in temperature to 32.2 degrees Celsius over 35 minutes was observed during the mixing process.

Samples of A and B were then delivered to a microbiological testing facility about 3 hours away from the microbiology laboratory. At the microbiology testing facility, the untreated (A) and treated (B) samples were distributed into a series of numbered Petri dishes ensuring that the depth in each Petri dish was uniform and the surfaces of the samples were flat. The dishes were left uncovered but protected by netting to protect against insects or the like but otherwise left open to the elements in a shed surrounded by fields at ambient temperature in order to mimic storage conditions on a farm. During the trial period the ambient temperature ranged from -0.7 to 22.8 degrees C.

Samples were provided by successively removing one Petri dish from the Sample A (untreated) set and one Petri dish from the sample B (treated) set. The samples were incubated on agar and the total viable counts (TVCs) and mould counts were measured initially and after one week, two weeks and one month, respectively.

### Analysis

The free moisture content of the initial, untreated whiskey distillation (damp grains) residue (Sample A) was determined to be 75.84% m/m. The free moisture content of the initial treated whiskey distillation residue (Sample B) was determined to be 66.65% m/m. After exposure to the environment for one, two and four weeks, respectively, both samples A and B were tested at an independent British GLP microbiological testing facility. Each was tested for total micro-organism, yeast and mould counts to determine the effect of the treatment applied over time. A similar procedure to that described in K.A. Rosentrater et al, Food Bioprocess Technol (2008) was used for the microbiological evaluation.

### Experimental Procedures

Each sample (10 g) was added to 90 ml Phosphate Buffered Saline (PBS). The samples were shaken for 10 minutes using a wrist action shaker (RWJ Rotashake). Serial ten-fold dilutions in PBS were made from the initial dilutions (typically 5 dilution steps). Pour plates were prepared using both molten Tryptone Soya Agar (TSA) for total aerobic bacterial and fungal counts, and molten Rose-Bengal Chloamphenicol Agar (RBCA) for fungal counts. Each dilution was tested in duplicate.

All agar plates were incubated at 20 ± 25°C for up to seven days. After that time the plates were counted in order to determine the number of colony forming units (cfu). The dilution giving 30 to 300 cfu per plate were chosen for plate counting.

### Sample appearance, odour and pH

The untreated sample (A) was compared visually against the corresponding quicklime-treated sample (B). The untreated material (A) showed no change in appearance and odour over the one month period, and appeared to become drier. The treated material (B) became much lighter in colour a few hours after treatment, but then remained unchanged in appearance over the one month period. The distinctive smell observed on day zero was much reduced after seven days. The pH of a 10% suspension in distilled water of the untreated material (A) showed an increase from 5.33 to 7.19 over the one month period. The pH of a 10% suspension in distilled water of the treated material (B), however, showed an opposite trend, i.e. a drop in pH from 12.80 to 8.41 (Tables 6 and 7).

### Results

Initial free moisture (Sample A): 75.84% m/m
Initial free moisture (Sample B): 66.65% m/m

**TABLE 30**

| Sample A - Counts and pH versus time | | | |
|---|---|---|---|
| **Day** | **Count cfu/g dry weight** | | **pH** |
| | **Total aerobic bacteria + fungi** | **Fungi** | |
| 0 | 6.71 x 10⁴ | <41 | 5.65 |
| 7 | 7.45 x 10⁸ | <41 | 5.33 |
| 14 | 2.73 x 10⁹ | 2.07 x 10⁶ | 5.83 |
| 1 month | 2.40 x 10⁹ | 2.90 x 10⁷ | 7.19 |
| 2 months | 7.20 x 10⁸ | 1.16 x 10⁷ | 5.49 |
| 3 months | 3.81 x 10⁸ | 2.07 x 10⁷ | 5.86 |
| 6 months | 8.73 x 10⁷ | 1.35 x 10⁷ | 5.38 |
| 9 months | 4.72 x 10⁷ | 6.00 x 10⁶ | 5.99 |
| 1 year | 4.04 x 10⁷ | 2.40 x 10⁶ | 5.27 |

| | | | |
|---|---|---|---|
| *cfu = colony forming units | | | |

### Observations of appearance and odour

No change over 1 year, except became more dry

### Temperature range throughout sampling period

-3.0 to 41.6°C

**TABLE 31**

| Sample B - Counts and pH versus time | | | |
|---|---|---|---|
| **Day** | **Count cfu/g dry weight*** | | **pH** |
| | **Total aerobic bacteria + fungi** | **Fungi** | |
| 0 | 60 | <30 | 12.80 |
| 7 | <30 | <30 | 11.99 |
| **14** | <30 | <30 | 8.60 |
| **1 month** | 1.20 x 10² | 1.20 x 10² | 8.41 |
| **2 months** | 9.75 x 10² | 9.60 x 10² | 8.37 |
| **3 months** | 2.85 x 10² | 1.80 x 10² | 8.17 |
| **6 months** | 5.70 x 10² | 3.15 x 10³ | 7.84 |
| **9 months** | 9.30 x 10² | 8.25 x 10² | 7.67 |
| **1 year** | 6.90 x 10² | 6.45 x 10² | 8.07 |

| | | | |
|---|---|---|---|
| *cfu = colony forming units | | | |

### Observations of appearance and odour

No change in appearance over 1 year except became more dry. The distinctive smell observed on Day 0 was much reduced by Day 7.

### Temperature range throughout sampling period

-3.0 to 41.6°C

### Conclusions

From the results shown in Table 30, it can be seen that there was a substantial increase in microbial growth in the untreated material (A) during the first two weeks of the trial period. A degree of microbial contamination and growth had already taken place pre-testing, as the hot material fresh from the distillation process could be expected to be sterile. The pH of the initial material was mostly slightly acidic during the 12 month trial period.

It can be seen from the results shown in Table 31 that both bacterial and fungal growth in the untreated material (A) was effectively eliminated during the first two weeks and then increased slightly and remained at low levels throughout the remainder of the 12 month trial period. The degree of bacterial contamination and growth that had already taken place pre-testing was not observed. This was because the treatment substance (calcium hydroxide formed by reacting calcium oxide with water in wet grains) present in the treated sample was transferred onto the agar plates and also inhibited microbial colony formation on the plates. The treatment substance killed microorganisms so that non-viable organisms were transferred onto the agar medium and hence no colonies formed on the agar as it was found that the active treatment agent (hydroxyl ion) is deactivated when mixed with the Phosphate Buffered Saline solution (PBS).

The pH of the treated material was initially high but decreased gradually during the trial period. Effective inhibition appears to be correlated to the pH level as a slight increase in counts is observed when the pH dropped below 8.60 after the second week.

The treated material became drier over time, which may explain the longer than expected preservation effect over the one year period that could be expected to be ascribed to chemical treatment only. Thus, the primary chemical sterilisation at the early stages of the trial is believed to be enhanced by a secondary preservation effect through mechanical air-drying of the residue over time which creates a hostile environment for microorganisms. The secondary drying effect could be compared to heat drying, however it is expected that heat-dried material would be subject to degradation through microbial action when exposed to moisture, whereas the chemically treated material is self-sterilising due the presence of the preservative and would be expected to be much more stable than a similar heat-dried material when exposure to moisture for example during storage or transportation.

### Example 3 - Comparative Example

### Spent Brewer's Grains

Samples of spent brewer's grains were drawn from the discharge line of a brewery in South Africa. The conditions of transportation and handling were the same as set out in Example 1.

At the laboratory, the samples were thoroughly mixed and initially split into a first portion (Portion 1) and a second portion (Portion 2). Portion 1 was left untreated. A sample of Portion 1,was delivered immediately to a microbiological testing facility about 15 kilometres away from the treatment laboratory and was tested for initial total microbial, yeast and mould counts, respectively. No water removal prior to treatment was done in this experiment as was the case in Example 2 wherein a similar wet material was partially dewatered by pressing and the residue treated with 10% (w/w/) calcium oxide.

### Sample treatment

Samples from Portion 2 were subjected to treatment with varying amounts of a powdered, commercially-available calcium oxide containing approximately 94% calcium oxide (CaO) as shown in Table 32. The treatments varied from 2.5 to 10% (w/w) calcium oxide addition. The samples were stored in batches (according to the calcium oxide treatment) under insect-proof screens at ambient temperature for fifty six days. Separate untreated samples were similarly stored under insect-proof screens at ambient temperature for a total of 56 days. During the trial period the ambient temperature ranged from 10 to 30 degrees C. As this period was the southern hemisphere spring / early summer, the humidity as well as ambient temperatures varied widely.

### Analysis

The free moisture content on the initial spent brewer's grains was determined to be 79.4% m/m. After exposure to the environment for seven days, all of the samples were tested at a South African National Accreditation System (SANAS) approved microbiological testing facility. Each was tested for total micro-organism, yeast and mould counts to determine the affect of the various treatments. A similar procedure to that described in K.A. Rosentrater et al, Food Bioprocess Technol (2008) was used for the microbiological evaluation.

Samples from each treatment were drawn every seven days. No further calcium oxide treatment or agitation took place after the initial mix. In each case the entire sample was isolated and delivered to the microbiological testing facility.

### Sample appearance

The "7-day" untreated samples were visually compared against the corresponding quicklime-treated samples. All the untreated samples were discoloured, and showed evidence of moulds growing on the surface after 7-days. In addition, they all exuded an unpleasant odour. The treated samples appeared lighter and more yellow in colour, coarser and highly grained, had no visible surface moisture and exuded no unpleasant odours. The higher the oxide content, the lighter and drier the samples appeared. This difference in appearance persisted across the entire test period. It was noted that all the samples appeared to lose moisture during the trial period.

### Results

The total bacterial, yeast and mould counts, respectively, over a period of 56 days are shown in Table 32. The results are reported as received.

**TABLE 32**

| **CaO treatment of wet distiller's grains** | | | | | | | | |
|---|---|---|---|---|---|---|---|---|
| | **No treatment** | | | | **2.5% CaO (w/w)** | | | |
| **Day** | **Total plate count*** | **Yeast Count*** | **Mould Count*** | **pH**** | **Total plate count*** | **Yeast Count*** | **Mould Count*** | **pH**** |
| **0** | 3,300,000 | 10 | 80 | N/A | X | X | X | N/A |
| **7** | 64,000,000 | 9,000,000 | 9,300 | N/A | 10 | 10 | 10 | N/A |
| **14** | 4,200,000 | 6,660,000 | 3,700,000 | N/A | 74,000 | 52,000 | 14,000 | N/A |
| **21** | 3,000,000 | 42,000,000 | 9,200 | N/A | 1,010,000 | 53,000 | 170,000 | N/A |
| **42** | 222,000,000 | 3,500,000 | 850,000 | N/A | N/A | N/A | 850,000 | N/A |
| **49** | 196,000,000 | 31,000,000 | 46,000 | N/A | N/A | N/A | 320,000 | N/A |
| **56** | 300,000,000 | 87,000,000 | 440,000 | N/A | 6,800,000 | 115,000 | 1,240,000 | N/A |
| | | | | | | | | |

| | **No treatment** | | | | **5.0% CaO (w/w)** | | | |
|---|---|---|---|---|---|---|---|---|
| **Day** | **Total plate count*** | **Yeast Count*** | **Mould Count*** | **pH**** | **Total plate count*** | **Yeast Count*** | **Mould Count*** | **pH**** |
| **0** | 3,300,000 | 10 | 80 | N/A | X | X | X | N/A |
| **7** | 64,000,000 | 9,000,000 | 9,300 | N/A | 660 | 10 | 10 | N/A |
| **14** | 4,200,000 | 6,660,000 | 3,700,000 | N/A | 82,000 | 10 | 10 | N/A |
| **21** | 3,000,000 | 42,000,000 | 9,200 | N/A | 180 | 10 | 150 | N/A |
| **42** | 222,000,000 | 3,500,000 | 850,000 | N/A | 20 | 10 | 20 | N/A |
| **49** | 196,000,000 | 31,000,000 | 46,000 | N/A | 50 | 20 | 90 | N/A |
| **56** | 300,000,000 | 87,000,000 | 440,000 | N/A | 3,400 | 20 | 90 | N/A |
| | | | | | | | | |

| | **No treatment** | | | | **10.0% CaO (w/w)** | | | |
|---|---|---|---|---|---|---|---|---|
| **Day** | **Total plate count*** | **Yeast Count*** | **Mould Count*** | **pH**** | **Total plate count*** | **Yeast Count*** | **Mould Count*** | **pH**** |
| **0** | 3,300,000 | 10 | 80 | N/A | X | X | X | N/A |
| **7** | 64,000,000 | 9,000,000 | 9,300 | N/A | 740 | 10 | 10 | N/A |
| **14** | 4,200,000 | 6,660,000 | 3,700,000 | N/A | 150 | 120 | 10 | N/A |
| **21** | 3,000,000 | 42,000,000 | 9,200 | N/A | 100 | 10 | 10 | N/A |
| **42** | 222,000,000 | 3,500,000 | 850,000 | N/A | 130 | 10 | 70 | N/A |
| **49** | 196,000,000 | 31,000,000 | 46,000 | N/A | 80 | 10 | 80 | N/A |
| **56** | 300,000,000 | 87,000,000 | 440,000 | N/A | 460 | 10 | 16 | N/A |

| | | | | | | | | |
|---|---|---|---|---|---|---|---|---|
| *colony forming units (cfu)/gram ** 1% (w/w) in distilled water | | | | | | | | |

### Conclusions

The effective inhibition and therefore shelf life of the treated fermentation residue was related to the amount of calcium oxide, the higher the dose, the longer the effective inhibition period and hence the longer the shelf life. This is shown in Table 32, which tracks the samples over a period of fifty six days and three different treatment levels, notwithstanding variations the could be due to sampling anomalies or particular weather conditions.

A complete sterilisation with total a reduction of total initial microbial count of 3,300,000 to zero and with a subsequent preservation effect over the 56 day trial period was observed at a calcium oxide level of 10% (w/w).

A similar but reduced effect in terms of both the initial sterilisation effect and subsequent preservation efficacy was observed at a calcium oxide level of 5.0% (w/w) over 49 days.

At the 2.5% (w/w) calcium oxide level a good initial sterilisation effect was observed with a subsequent preservation effect over only the first week of the trial period.

It was not possible to determine from Examples 1-2 whether the treatment had killed the microorganisms or only inhibited them. When the plates were poured for counts it was possible that the treatment reagent was still present in the agar and inhibited growth of the colonies in the agar. An attempt was then made to effectively remove the treatment agent (calcium hydroxide) before transfer onto the colony growth medium (agar) from the treated sample using the untreated sample as a control.

This was done by repeatedly washing with sterile water and centrifuging to remove the dissolved calcium hydroxide in the supernatant. On re-suspending in fresh water the sample was shaken for 10 minutes in order to dissolve the calcium hydroxide before centrifuging. This procedure was conducted a total of six times and the pH of the supernatant was measured to determine any reduction in the pH.

After the fifth centrifugation the pellet was re-suspended in water and the pH was found to be 9.72. The pellet was centrifuged for a sixth time and re-suspended in PBS. The pH was found to be 8.39. By comparison the values of the untreated sample after centrifugation were 6.22 in water and 6.72 in PBS. The washing and centrifugation procedure had accordingly failed to remove the calcium hydroxide and the pH was actually higher than the pH measured initially.

A membrane filtration was therefore attempted in order to capture any bacteria on a membrane disc and wash through all other material. However, this technique was also found not to be successful as the sample quickly blocked the filter (even though the material was allowed to settle for a few minutes to remove the grains).

A new approach was therefore followed to prove whether the treatment of the invention killed or inhibited the microorganisms. When performing total viable counts (TVCs), the agar plates (when they were molten and containing 1 ml of the test sample dilution) were spiked with bacterial organisms (*E.Coli* and P. *aeruginosa)* of a known concentration. If the organisms grew, this would indicate that the conditions in the agar plate had not inhibited them. A control with no sample was run at the same time. If no growth from the samples was demonstrated, this would indicate kill rather than inhibition.

### Example 4 - Comparative Example

### Anti-microbial Effect of Calcium Hydroxide

The object of this example was to investigate the anti-microbial effect of calcium hydroxide in solution. The anti-microbial activity of an aqueous calcium hydroxide solution was tested against a pathogen (*E.Coli*). It was found that the hydroxide solution killed the pathogen thereby indicating that the hydroxyl anion acts as a potent anti-microbial agent which reduces the microbial count by killing rather than inhibiting microorganisms.

### Test Sample

Calcium hydroxide was obtained from Acros (code 219181000, >98% pure). It was formulated in distilled water with continuous stirring for several hours at 1.67g/L (0.023 M). This was around its limit of solubility at room temperature and it formed a hazy solution at this concentration.

### Method

*Escherichia coli* NCIMB 8545 was subcultured onto TSA and the plates incubated at at 30 - 35°C for approximately 24 hours. After this time, surface growth was harvested and directly suspended into sterile distilled water and standardised to give 30 - 45% light transmission at 520 nm on a Jenway 6105 Spectrophotometer - an approximate yield of 2 (10⁸) cfu/ml. A 0.1 ml aliquot of this suspension was inoculated into 9.9 ml of CaOH solution. This was performed in duplicate. At the same time, 1 ml of bacterial suspension was removed from the original stock suspension and placed into 9 ml PBS to perform the initial (Time 0) count. The inoculated calcium hydroxide suspensions were then shaken for one hour at room temperature. After this time 1 ml samples of the bacterial suspension were removed from the test containers and placed into 9 ml PBS. For each diluted sample, further serial ten-fold dilutions in PBS down to 10⁻⁵ were made and then used to prepare duplicate 1 ml pour plate counts in TSA. Pour plates were also prepared from the neat (undiluted) sample. The plates were incubated at 30 - 35°C for approximately 24 hours. Following incubation, the plates were counted. Optimally, plates with counts of 30 - 300 colonies were used to calculate the counts at each sampling time.

In order to demonstrate that the calcium hydroxide did not have an inhibitory effect on the growth of the test organism when present in the agar plates, the calcium hydroxide was diluted in PBS to give a series of ten-fold dilutions. One ml pour plates using molten TSA were prepared for each dilution. However, at the same time as the pour plates were prepared, the plates were inoculated with *Escherichia coli* NCIMB 8545 in 0.1 ml aliquots from a suspension containing approximately 1000 bacterial cells. This was performed in duplicate.

The plates were incubated at 30 - 35°C for approximately 24 hours after which time the bacterial colonies were counted.

### Results

### Antimicrobial efficacy test

Time 0 count: 3.75 x 10⁶ cfu/ml
60 minute count, replicate A: 0, 0
60 minute count, replicate B: 0, 0

### Spiking test

| **Dilution** | **Individual count** | **Mean count** |
|---|---|---|
| Control | 237,192 | 215 |
| Neat | 216,191 | 205 |
| -1 | 197,209 | 203 |
| -2 | 194,203 | 199 |
| -3 | 192,240 | 216 |
| -4 | 194,196 | 195 |
| -5 | 235,194 | 215 |

### Discussion

A saturated solution of calcium hydroxide at 1.67 g/L (0.023 M) demonstrated potent antimicrobial activity. The spiking test showed that there was full recovery of the test organism (E.coli) at all sample dilutions. Therefore the calcium hydroxide did not demonstrate an inhibitory effect on the test organism and any reduction in the number of organisms was due to kill.

### Example 5

### Anti-microbial Effect against Escherichia coli

The object of this example was to evaluate the anti-microbial effect against Escherichia coli of saturated, aqueous solutions of calcium glyceroxide *versus* calcium hydroxide at reduced contact times.

The experiment described in Example 4 was therefore repeated using a saturated aqueous solution of calcium diglyceroxide *versus* a saturated aqueous solution of calcium hydroxide as control at contact times of 1 hour and 10 minutes, respectively.

### Test Samples

Calcium hydroxide and calcium diglyceroxide powders were dissolved in sterile distilled water at 8.35 g/L (0.037M) for calcium diglyceroxide and 1.67 g/L (0.023M) for calcium hydroxide with continuous stirring for several hours. This was around the limit of solubility at room temperature and hazy solutions formed at these concentrations.

### Method

*Escherichia coli* NCIMB 8545 was subcultured onto TSA and the plates incubated at 30 - 35°C for approximately 24 hours. After this time, surface growth was harvested and directly suspended into sterile distilled water and standardised to give 30 - 45% light transmission at 520 nm on a Jenway 6105 Spectrophotometer - an approximate yield of 2 × 10⁸ cfu/ml. A 0.1 ml aliquot of this suspension was inoculated into 9.9 ml of both saturated calcium diglyceroxide and calcium hydroxide solutions. This was performed in duplicate. At the same time, 1 ml of bacterial suspension was removed from the original stock suspension and placed into 9 ml PBS to perform the initial (Time 0) count. The inoculated suspensions were then shaken for one hour at room temperature. After both 10 minutes and one hour, 1 ml samples of the bacterial suspension were removed from the test containers and placed into 9 ml PBS. For each diluted sample, further serial ten-fold dilutions in PBS down to 10⁻⁵ were made and then used to prepare duplicate 1 ml pour plate counts in TSA. Pour plates were also prepared from the neat (undiluted) sample. The plates were incubated at 30 - 35°C for approximately 24 hours.

Following incubation, the plates were counted. Optimally, plates with counts of 30 - 300 colonies were used to calculate the counts at each sampling time.

### Results

No colonies were present on any plates from the samples treated with calcium diglyceroxide and calcium hydroxide solutions after 10 minutes and one hour incubation. The time 0 count was 4.00 x 10⁶ cfu/ml.

### Conclusion

The saturated solution of calcium diglyceroxide at 8.35 g/L (0.037 M) demonstrated potent antimicrobial activity which was comparable with calcium hydroxide at 1.67 g/L (0.023M). This showed that both saturated solutions of calcium diglyceroxide and calcium hydroxide demonstrated potent antimicrobial activity at contact times of 1 hour and 10 minutes, respectively.

### Example 6

### Anti-microbial Effect Against Other Microbial Species

The object of this example was to evaluate the anti-microbial effect against additional microbial species of saturated, aqueous solutions of calcium glyceroxide *versus* calcium hydroxide at reduced contact times.

The experiment described in Example 4 was therefore repeated using a saturated aqueous solution of calcium diglyceroxide *versus* a saturated aqueous solution of calcium hydroxide as control against Escherichia coli, Salmonella abony and Clostridium difficile at contact times of 10 minutes and 1 minute, respectively.

### Test Samples

Calcium hydroxide and calcium diglyceroxide powders were dissolved in sterile distilled water at 8.35 g/L (0.037M) for calcium diglyceroxide and 1.67 g/L (0.023M) for calcium hydroxide with continuous stirring for several hours. This was around the limit of solubility at room temperature and hazy solutions formed at these concentrations.

### Method

*Escherichia coli* NCIMB 8545 and *Salmonella abony* NCTC 6017 were subcultured onto Tryptone Soya Agar (TSA) and the plates incubated at 30 - 35°C for approximately 24 hours. *Clostridium difficile* ATCC 43255 was subcultured onto Fastidious Anaerobe Agar (FAA) + 5% defibrinated horse blood and the plates incubated at 30 - 35°C for approximately 48 hours. After this time, surface growth was harvested and directly suspended into sterile distilled water and standardised to give 30 - 45% light transmission at 520 nm on a Jenway 6105 Spectrophotometer - an approximate yield of 2 × 108 cfu/ml. Aliquots (0.1 ml) of these suspensions were inoculated separately into 9.9 ml of both calcium diglyceroxide and calcium hydroxide saturated solutions. This was performed in duplicate for each organism. At the same time, 1 ml of bacterial suspension was removed from the original stock suspensions and placed into 9 ml PBS to perform the initial (Time 0) count. The inoculated suspensions were then shaken for ten minutes at room temperature. After 1 and 10 minutes, 1 ml samples of the bacterial suspensions were removed from the test containers and placed into 9 ml PBS. For each diluted sample, further serial ten-fold dilutions in PBS down to 10-5 were made and then used to prepare duplicate 1 ml pour plate counts in TSA. Pour plates were also prepared from the neat (undiluted) sample. For *Clostridium difficile,* 0.1 ml spread plates were prepared on FAA instead of 1 ml pour plates due to the presence of blood in the agar. The plates were incubated at 30 - 35°C for approximately 24 hours (48 hours for *Clostridium difficile).*

Following incubation, the plates were counted. Optimally, plates with counts of 30 - 300 colonies were used to calculate the counts at each sampling time.

### Results

### Escherichia coli

### One minute treatment

| **Sample** | **Corrected count cfu/mL** |
|---|---|
| Inoculum count (t=0) | 6.95 x 10⁸ |
| Calcium hydroxide replicate A | 1.35 x 10⁶ |
| Calcium hydroxide replicate B | 1.23 x 10⁵ |
| Calcium diglyceroxide replicate A | 0 |
| Calcium diglyceroxide replicate B | 1 |

No colonies were present on any plates from the samples treated with calcium diglyceroxide solution and calcium hydroxide solution after 10 minutes incubation.

### Salmonella abony

### One minute treatment

| **Sample** | **Corrected count cfu**/**mL** |
|---|---|
| Inoculum count (t=0) | 7.00 x 10⁸ |
| Calcium hydroxide replicate A | 59 |
| Calcium hydroxide replicate B | 11 |
| Calcium diglyceroxide replicate A | 2 |
| Calcium diglyceroxide replicate B | 3 |

No colonies were present on any plates from the samples treated with calcium diglyceroxide solution and calcium hydroxide solution after 10 minutes incubation

### Clostridium difficile

### One minute treatment

| **Sample** | **Corrected count cfu**/**mL** |
|---|---|
| Inoculum count (t=0) | 8.20 x 10⁷ |
| Calcium hydroxide replicate A | 8.50 x 10² |
| Calcium hydroxide replicate B | 9.50 x 10² |
| Calcium diglyceroxide replicate A | 1.30 x 10³ |
| Calcium diglyceroxide replicate B | 7.00 x 10² |

### Ten minute treatment

| **Sample** | **Corrected count cfu/mL** |
|---|---|
| Inoculum count (t=0) | 8.20 x 10⁷ |
| Calcium hydroxide replicate A | 1.10 x 10² |
| Calcium hydroxide replicate B | 1.20 x 10² |
| Calcium diglyceroxide replicate A | 85 |
| Calcium diglyceroxide replicate B | 50 |

### Conclusion

The saturated solution of calcium diglyceroxide at 8.35 g/L (0.037 M) demonstrated potent antimicrobial activity with at least a 4 log₁₀ reduction observed for each organism after the one minute treatment period. After the ten minute treatment period, no colonies were observed for *Escherichia coli* and *Salmonella abony,* but some colonies of *Clostridium difficile* were recovered, although a 6 log₁₀ reduction was observed. The saturated calcium diglyceroxide solution at 8.35 g/L (0.037 M) was demonstrated to be more effective than the saturated calcium hydroxide solution at 1.67 g/L (0.023 M).

### Example 7

The calcium oxide treatment trial described in Example 3 wherein wet distiller's grains were treated with 2.5%, 5% and 10.0% calcium oxide powder, respectively, *versus* untreated material was repeated using a calcium oxide powder dose of 5% (w/w) as control *versus* calcium hydroxide powder at 6/6% (w/w) powder and calcium diglyceroxide (Ca-DGO) powder at 20% and 40% (w/w), respectively.

In this trial the same source of wet distiller's grains (again with now partial water removal prior to treatment) was treated. Also, the same protocol as described in Example 9 was applied.

The relative dose level by weight of the calcium hydroxide was increased in order to take into account the amount needed to theoretically provide the same hydroxyl ion concentration than in the case of the corresponding calcium oxide dose (5% w/w) assuming complete solubilisation in water in each instance:

CaO + XH₂O → Ca²⁺ + 2OH⁻ + (X-1)H₂O 56.077 g/mole 34.014 g/mole

Thus
5.00 g CaO provides 0.0892 mole (3.0328g) hydroxyl ions (active) in aqueous solution

Ca(OH)₂ + XH₂O → Ca²⁺ + 2OH⁻ + XH₂O 74.236 g/mole 34 g/mole

Thus
6.62 g Ca(OH)₂ provides 0.0892 mole (3.0328g) hydroxyl ions (active) in aqueous solution

A similar conversion was applied to calcium diglyceroxide in which case a dose of *ca* 20 gram provides the same amount (0.08929 mole) of anti-microbial active than a calcium oxide dose of 5 gram:

CaO + XH₂O → Ca²⁺ + 2OH⁻ + (X-1)H₂O 56.077 g/mole 34.014 g/mole

Thus
5.00 g CaO provides 0.0892 mole (3.0328g) hydroxyl ions (active) in aqueous solution

Ca(GlyO)₂ + XH₂O → Ca²⁺ + 2GlyO⁻ + XH₂O 222.249 g/mole 182.172 g/mole

Thus
19.85 g Ca(GlyO)₂ provides 0.0892 mole (16.266 g) glyceroxyl ions (active) in aqueous solution

An additional double calcium diglyceroxide powder dose of 40% (w/w) was included in order to compare the relative efficacy thereof with the 20% (w/w) dose over the 5 week duration of the trial period.

The calcium diglyceroxide powder (<1 mm particle size) used in these trials was prepared according to the method described in Bio-Energy Ingredients Ltd Patent PCT/IB2009/052931. (Please change if this number is incorrect). X-ray diffraction analysis (XRD) of the powder confirmed that the material was pure phase calcium diglyceroxide. The diffraction pattern was an identical match of the calcium diglyceroxide pattern published by Kouzu *et al* for crystalline calcium diglyceroxide which was prepared under anhydrous conditions in refluxing methanol under an inert atmosphere (Kouzou, M.; Applied Catalysis A: General; vol. 334 (2008), page: 357-365).

The purpose of this trial was to ascertain the effect on microbial counts and hence degree of preservation achieved over time for the respective substances at the specified dose levels. The pH values of all test samples were also measured in order to establish the relationship between pH level and microbial levels as also observed and discussed in Example 2 wherein a similar, but partially de-watered residue was treated with calcium oxide at 10% (w/w). The results of these trials are summarised in Table 34.

**TABLE 34**

| **Week** | **No treatment** | | | | **5% CaO (w/w) powder** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 33000 | <10 | <10 | | | | | |
| **1** | 7.50E+07 | 10200 | 160 | 7.30 | 2770 | 10 | 10 | 11.36 |
| **2** | 3.00E+07 | 3.80E+06 | 1.90E+06 | 7.06 | 200 | 10 | 10 | 11.00 |
| **3** | 1.60E+08 | 3.70E+06 | 49000 | 8.20 | 4800 | 113 | 10 | 12.20 |
| **4** | 3.00E+08 | 1.50E+08 | 61000 | 8.32 | 10 | 10 | 10 | 11.61 |
| **5** | 3.00E+08 | 10 | 790000 | 8.46 | 10 | 10 | 10 | 11.34 |
| | | | | | | | | |

| | **No treatment** | | | | **6.6% Ca(OH)₂ (w/w) powder** | | | |
|---|---|---|---|---|---|---|---|---|
| **Week** | **Total plate count*** | **Yeast Count*** | **Mould Count*** | **pH**** | **Total plate count*** | **Yeast Count*** | **Mould Count*** | **pH**** |
| **0** | 33000 | <10 | <10 | | | | | |
| **1** | 7.50E+07 | 10200 | 160 | 7.30 | 420 | 10 | 10 | 11.55 |
| **2** | 3.00E+07 | 3.80E+06 | 1.90E+06 | 7.06 | 140 | 10 | 10 | 11.26 |
| **3** | 1.60E+08 | 3.70E+06 | 49000 | 8.20 | 640 | 10 | 10 | 12.10 |
| **4** | 3.00E+08 | 1.50E+08 | 61000 | 8.32 | 170 | 120 | 10 | 8.23 |
| **5** | 3.00E+08 | 10 | 790000 | 8.46 | 20 | 10 | 10 | 11.47 |
| | | | | | | | | |

| | **No treatment** | | | | **20% Ca-DGO (w/w) powder** | | | |
|---|---|---|---|---|---|---|---|---|
| **Week** | **Total plate count*** | **Yeast Count*** | **Mould Count*** | **pH**** | **Total plate count*** | **Yeast Count*** | **Mould Count*** | **pH**** |
| **0** | 33000 | <10 | <10 | | | | | |
| **1** | 7.50E+07 | 10200 | 160 | 7.30 | 80 | 10 | 10 | 11.47 |
| **2** | 3.00E+07 | 3.80E+06 | 1.90E+06 | 7.06 | 310 | 10 | 10 | 11.16 |
| **3** | 1.60E+08 | 3.70E+06 | 49000 | 8.20 | 140 | 10 | 10 | 12.00 |
| **4** | 3.00E+08 | 1.50E+08 | 61000 | 8.32 | 40 | 10 | 10 | 11.23 |
| **5** | 3.00E+08 | 10 | 790000 | 8.46 | 10 | 10 | 10 | 10.83 |
| | | | | | | | | |

| | **No treatment** | | | | **40% Ca-DGO (w/w) powder** | | | |
|---|---|---|---|---|---|---|---|---|
| **Week** | **Total plate count*** | **Yeast Count*** | **Mould Count*** | **pH**** | **Total plate count*** | **Yeast Count*** | **Mould Count*** | **pH**** |
| **0** | 33000 | <10 | <10 | | | | | |
| **1** | 7.50E+07 | 10200 | 160 | 7.30 | 40 | 10 | 10 | 11.66 |
| **2** | 3.00E+07 | 3.80E+06 | 1.90E+06 | 7.06 | 450 | 10 | 10 | 11.50 |
| **3** | 1.60E+08 | 3.70E+06 | 49000 | 8.20 | 103 | 20 | 10 | 12.30 |
| **4** | 3.00E+08 | 1.50E+08 | 61000 | 8.32 | 10 | 10 | 10 | 11.52 |
| **5** | 3.00E+08 | 10 | 790000 | 8.46 | 10 | 10 | 10 | 11.13 |

| | | | | | | | | |
|---|---|---|---|---|---|---|---|---|
| *colony forming units (cfu)/gram ** 1% (w/w) in distilled water | | | | | | | | |

### Conclusions

A substantial reduction in initial microbial count i.e. sterilisation effect was observed with calcium diglyceroxide powder at both the 20% and 40% (w/w) dose levels, with smaller but significant day 1 reductions observed with calcium hydroxide powder at 6.6% (w/w) and calcium oxide powder at 5% (w/w).

All materials were effectively preserved as demonstrated by the very small microbial counts of the test samples *i.e.* in the order of 10-20 colony forming units per gram at the end of the 5 week trial period compared to the 300,000,000 cfu/gram of the untreated material.

At the end of the trial period the pH values of all the test samples were still very high which indicated high levels of remaining, unreacted and thus available anti-microbial hydroxide/glyceroxyl ions at the end of the 5 week trial period. The result obtained for the 5% (w/w) calcium oxide treatment corresponds to the result obtained in Example 9 (Table 32) for treatment with 5% (w/w) calcium oxide powder at the 42 day (6 weeks) time point.

### Example 8

The experiment described in Example 7 was repeated under similar conditions evaluating the anti-microbial efficacy of calcium diglyceroxide powder at a lower dose level of 10% (w/w). The results of this trial are shown in Table 35.

**TABLE 35**

| | **No Treatment** | | | | **10% Ca-DGO (w/w) powder** | | | |
|---|---|---|---|---|---|---|---|---|
| **Week** | **Total plate count*** | **Yeast Count*** | **Mould Count*** | **pH**** | **Total plate count*** | **Yeast Count*** | **Mould Count*** | **pH**** |
| **0** | 97000 | <10 | <10 | 7.02 | | | | |
| **1** | 3.70E+06 | <10 | 150 | 7.05 | 610 | <10 | <10 | 9.43 |
| **2** | 2.30E+08 | 1.22E+06 | 1.50E+07 | 7.57 | <10 | <10 | <10 | 7.32 |
| **3** | 3.00E+08 | 3.30E+07 | 1.90E+06 | 6.90 | 580 | <10 | <10 | 7.31 |
| **4** | 3.00E+08 | 5.20E+07 | 2.00E+07 | 6.84 | 5000 | <10 | 310 | 8.01 |
| **5** | 3.00E+08 | 1.50E+08 | 1.44E+08 | 7.12 | 36000 | <10 | 1020 | 7.23 |

| | | | | | | | | |
|---|---|---|---|---|---|---|---|---|
| *colony forming units (cfu)/gram ** 1% (w/w) in distilled water | | | | | | | | |

### Conclusions

A substantial reduction in initial total microbial count was observed with calcium diglyceroxide powder at the 10% (w/w) level. The residue was also effectively preserved over the first 3 weeks of the trial with a total microbial count of 580 at the 3 week time point. The total microbial count after weeks 4 and 5 of 5,000 and 36,000, respectively, were still below the 97,000 of the material received and tested on day 0 and substantially lower than that of the untreated residue which had a total microbial count in the order of 2-3 x 10⁸ from weeks 2 to 5.

The pH values of the test samples decreased over time and reflected the decline in glyceroxyl ion levels and hence the observed decline in anti-microbial efficacy of the treatment agent during the course of the 5 week trial.

### Example 9

The experiment described in Example 8 was repeated under similar conditions evaluating the anti-microbial efficacy of calcium diglyceroxide granules (1-2.36 mm particle size) as opposed to the powder (<1 mm particle size) at the same dose level of 10% (w/w). The results of this trial are shown in Table 36.

The calcium diglyceroxide granules (1-2.36 mm particle size) used in this and subsequent trials was prepared according to the same method as described for the preparation of the powder in Example 7.

**TABLE 36**

| | **No treatment** | | | | **10% Ca-DGO (w/w) granules** | | | |
|---|---|---|---|---|---|---|---|---|
| **Week** | **Total plate count*** | **Yeast Count*** | **Mould Count*** | **pH**** | **Total plate count*** | **Yeast Count*** | **Mould Count*** | **pH**** |
| **0** | 97000 | <10 | <10 | 7.53 | | | | |
| **1** | 3.00E+08 | 43000 | 80000 | 7.16 | 11000 | 480 | 10 | 7.88 |
| **2** | 3.00E+10 | <10 | 1.08E+10 | 7.55 | <10 | <10 | <10 | 7.71 |
| **3** | 3.00E+08 | 6.60E+06 | 3.30E+07 | 7.74 | 540 | <10 | <10 | 7.44 |
| **4** | 3.00E+08 | <10 | 2.10E+07 | 7.12 | 60 | <19 | <10 | 7.14 |
| **5** | 2.35E+08 | <10 | 5.50E+07 | 5.72 | 650 | <10 | <10 | 8.37 |

| | | | | | | | | |
|---|---|---|---|---|---|---|---|---|
| *colony forming units (cfu)/gram ** 1% (w/w) in distilled water | | | | | | | | |

### Conclusions

A substantial but smaller reduction in initial total microbial count at day 1 was observed with the calcium diglyceroxide granules compared to the powder (Example 8) at the 10% (w/w) level. As in the case of the powder, the residue was also effectively preserved at the 2 and 3 week tome points of the trial with similar total microbial counts than that achieved for the powder of below 10 and 540 at the 2 and 3 week time points, respectively. The granules did out-performed the powder at the 4 and 5 week time points with total microbial count of only 60 and 650, respectively, at these time points compared to the 5,000 and 36,000 levels obtained at the 4 and 5 week time points for the powder shown in Example 8 (Table 35).

The longer preservation time achieved for the granules compared to the powder is ascribed to a slow/sustained release effect of the anti-microbial agent i.e. glyceroxyl ions from the granules compared to the faster action, but shorter effective duration observed for the powder shown in Example 8 (Table 35). The addition of treatment agent in granule form as opposed to powder form therefore appears to enhance the period of effective anti-microbial action.

The pH values of the test samples were lower than that obtained for the test samples when using the powder (Example 8, Table 35). This is ascribed to the lower solubility of the granules compared to the powder when preparing 1% suspensions of the test samples in distilled water for pH measurement.

It is concluded that the shelf life of the wet distiller's grains were increased by the larger particle size of the treatment agent which gave rise to a situation where the treatment agent released the anti-microbial active slowly where and when it was exposed to moisture *i.e.* under conditions which promote the growth and multiplication of micro-organisms. This mode of action is a consequence of the smaller relative exposed surface area of the granules and hence lower solubility in water thereof compared to the powder. However, in cases where a quick, but shorter anti-microbial action is required, the powder would be the preferred choice as demonstrated by the total microbial counts at the week 1 time point for powder (Table 35) compared to granules (Table 36).

### Example 10

A trial similar to those described in Examples 7-9 was performed using the following treatment agents:
- Calcium oxide powder at 5% and 10% (w/w)
- Calcium hydroxide at 3.3% and 6.6% (w/w)
- Calcium diglyceroxide (Ca-DGO) in powder form at a dose level of 15 % (w/w)
- Calcium diglyceroxide (Ca-DGO) in granule form at dose levels of 10% and 15% (w/w)
- Calcium diglyceroxide (Ca-DGO) in a 1:1 mixed powder-granule form at 15% (w/w)

The purpose of this trial was to establish the anti-microbial efficacies of the treatment agents at the selected doses in terms of their initial sterilisation efficacies and subsequent preservation efficacies over a 9 week period..

The 3.3% (w/w) and 6.6% (w/w) calcium hydroxide levels correspond in terms of molar amount of active theoretically provided by 2.5% (w/w) and 5% (w/w) calcium oxide, respectively, whereas the 10% (w/w) and 15% (w/w) calcium diglyceroxide levels would correspond in terms of the molar amount of anti-microbial active theoretically provided by *ca* 2.5% (w/w) and *ca* 3.75% (w/w) calcium oxide, respectively according to the principles suggested in Example 7.

The calcium diglyceroxide powder (<1 mm particle size) and granules (1-2.36 mm particle size) used in this trial was prepared according to the same method as described in Example 7.

The results of microbiological testing of test samples at weekly intervals are shown in Tables 37 to 42.

**TABLE 37 - Treatment with calcium oxide powder over 9 weeks**

| **Week** | **No treatment** | | | | **10% CaO (w/w) powder** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 4700 | 1700 | 40 | 7.22 | 100 | <10 | <10 | 13.12 |
| **1** | 2.10E+08 | 1.14E+07 | 1.24E+06 | 6.55 | 310 | <10 | <10 | 12.56 |
| **2** | 7.30E+07 | 5.50E+07 | 1.14E+06 | 7.39 | 150 | <10 | <10 | 12.38 |
| **3** | N/A | N/A | N/A | N/A | 40 | <10 | <10 | 12.36 |
| **4** | N/A | N/A | N/A | N/A | 20 | <10 | <10 | 12.20 |
| **5** | N/A | N/A | N/A | N/A | N/A | <10 | <10 | 12.12 |
| **6** | N/A | N/A | N/A | N/A | <10 | <10 | <10 | 11.92 |
| **7** | N/A | N/A | N/A | N/A | 300 | <10 | 3500 | 7.56 |
| **8** | N/A | N/A | N/A | N/A | 80 | <10 | <10 | 8.38 |
| **9** | N/A | N/A | N/A | N/A | <10 | <10 | <10 | 11.77 |
| | | | | | | | | |

| **Week** | **No treatment** | | | | **5% CaO (w/w) powder** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 4700 | 1700 | 40 | 7.22 | 640 | <10 | <10 | 12.93 |
| **1** | 2.10E+08 | 1.14E+07 | 1.24E+06 | 6.55 | 1800 | <10 | <10 | 12.05 |
| **2** | 7.30E+07 | 5.50E+07 | 1.14E+06 | 7.39 | 280 | <10 | <10 | 11.19 |
| **3** | N/A | N/A | N/A | N/A | 210 | <10 | <10 | 7.82 |
| **4** | N/A | N/A | N/A | N/A | <10 | <10 | <10 | 9.23 |
| **5** | N/A | N/A | N/A | N/A | N/A | <10 | <10 | 7.55 |
| **6** | N/A | N/A | N/A | N/A | 40 | <10 | <10 | 9.23 |
| **7** | N/A | N/A | N/A | N/A | 900 | <10 | <10 | 7.28 |
| **8** | N/A | N/A | N/A | N/A | 120 | <10 | <10 | 7.60 |
| **9** | N/A | N/A | N/A | N/A | 20 | <10 | <10 | 8.45 |

| | | | | | | | | |
|---|---|---|---|---|---|---|---|---|
| *colony forming units (cfu)/gram ** 1% (w/w) in distilled water | | | | | | | | |

### Conclusions

A substantial reduction in initial microbial counts compared to that of the untreated material i.e. sterilisation effect was achieved with calcium oxide at the 10% (w/w) levels. The material was effectively preserved throughout the 9 week period as reflected in the low microbial counts. A similar but reduced efficacy level especially during the initial stages was achieved with calcium oxide powder at the 5% (w/w) level. In both instances the material had very low microbial counts at the end of the 9 week period, i.e. in the order of <10 to 20 cfu/gram compared to the untreated material which had counts in the order of 10⁷ to 10⁸ already at the week 1 and 2 time points (testing therefore discontinued).

**TABLE 38 - Treatment with calcium hydroxide powder over 9 weeks**

| **Week** | **No treatment** | | | | **6.6% (CaOH)₂ (w/w) powder** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 4700 | 1700 | 40 | 7.22 | 70 | <10 | <10 | 12.90 |
| **1** | 2.10E+08 | 1.14E+07 | 1.24E+06 | 6.55 | 50 | <10 | <10 | 12.30 |
| **2** | 7.30E+07 | 5.50E+07 | 1.14E+06 | 7.39 | 160 | <10 | <10 | 11.08 |
| **3** | N/A | N/A | N/A | N/A | 1550 | <10 | <10 | 11.78 |
| **4** | N/A | N/A | N/A | N/A | 290 | <10 | <10 | 9.51 |
| **5** | N/A | N/A | N/A | N/A | <10 | <10 | <10 | 7.68 |
| **6** | N/A | N/A | N/A | N/A | <10 | <10 | <10 | 10.61 |
| **7** | N/A | N/A | N/A | N/A | 5000 | <10 | <10 | 7.25 |
| **8** | N/A | N/A | N/A | N/A | 960000 | <10 | <10 | 9.13 |
| **9** | N/A | N/A | N/A | N/A | 1.24E+06 | <10 | 10 | 8.84 |
| | | | | | | | | |

| **Week** | **No treatment** | | | | **3.3% (CaOH)₂ (w/w) powder** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 4700 | 1700 | 40 | 7.22 | 60 | <10 | <10 | 11.78 |
| **1** | 2.10E+08 | 1.14E+07 | 1.24E+06 | 6.55 | 12100 | <10 | <10 | 11.57 |
| **2** | 7.30E+07 | 5.50E+07 | 1.14E+06 | 7.39 | N/A | <10 | <10 | 8.69 |
| **3** | N/A | N/A | N/A | N/A | N/A | <10 | <10 | 9.08 |
| **4** | N/A | N/A | N/A | N/A | 1750 | <10 | <10 | 8.45 |
| **5** | N/A | N/A | N/A | N/A | 20 | <10 | <10 | 7.66 |
| **6** | N/A | N/A | N/A | N/A | <10 | <10 | <10 | 9.32 |
| **7** | N/A | N/A | N/A | N/A | 101000 | <10 | <10 | 7.25 |
| **8** | N/A | N/A | N/A | N/A | 3.20E+06 | <10 | <10 | 9.29 |
| **9** | N/A | N/A | N/A | N/A | N/A | N/A | N/A | N/A |

| | | | | | | | | |
|---|---|---|---|---|---|---|---|---|
| *colony forming units (cfu)/gram ** 1% (w/w) in distilled water | | | | | | | | |

### Conclusions

A better initial sterilisation and subsequent preservation effect over the first 2 weeks was achieved with the 6.6% (w/w) calcium hydroxide powder than with calcium oxide (Table 37) at both the corresponding 5% (w/w) as well as the higher 10% (w/w) levels. This was likely due to the better availability of the anti-microbial hydroxyl ions than in the case of the calcium oxide which only generates the hydroxide through exposure to a sufficient amount of free water:

CaO + XH₂O → Ca²⁺ + 2OH⁻ + (X-1)H₂O

As most of the water in the wet grains is contained inside the grain particles, this has a limiting effect on the calcium oxide efficacy compared to that of the calcium hydroxide powder during the first few weeks. However, over time, the calcium oxide out-performed the calcium hydroxide powder likely as the result of a slow release effect as the reservoir of calcium oxide is slowly converted to calcium hydroxide through contact with air-humidity and gradual release of moisture from the grains. This concept of slow, sustained anti-microbial action is similar to that observed with calcium glyceroxide granules *versus* powder (Example 9).

An effective initial sterilisation effect was achieved with calcium hydroxide powder at the 3.3% (w/w) level. A reduced efficacy was however achieved at the later stages of the trial period compared to the 6.6% (w/w) dose.

**TABLE 39 - Treatment with calcium diglyceroxide powder over 9 weeks**

| **Week** | **No treatment** | | | | **15% (w/w) Ca-DGO powder** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 4700 | 1700 | 40 | 7.22 | 40 | <10 | <10 | 11.50 |
| **1** | 2.10E+08 | 1.14E+07 | 1.24E+06 | 6.55 | 80 | <10 | <10 | 11.73 |
| **2** | 7.30E+07 | 5.50E+07 | 1.14E+06 | 7.39 | N/A | <10 | <10 | 7.33 |
| **3** | N/A | N/A | N/A | N/A | 100 | <10 | <10 | 7.38 |
| **4** | N/A | N/A | N/A | N/A | 10 | <10 | <10 | 8.83 |
| **5** | N/A | N/A | N/A | N/A | N/A | <10 | <10 | N/A |
| **6** | N/A | N/A | N/A | N/A | 50 | <10 | <10 | 9.18 |
| **7** | N/A | N/A | N/A | N/A | 40 | <10 | <10 | N/A |
| **8** | N/A | N/A | N/A | N/A | 70 | <10 | <10 | 9.14 |
| **9** | N/A | N/A | N/A | N/A | 10 | <10 | 350 | 9.07 |

| | | | | | | | | |
|---|---|---|---|---|---|---|---|---|
| *colony forming units (cfu)/gram ** 1% (w/w) in distilled water | | | | | | | | |

### Conclusions

An effective initial sterilisation and subsequent preservation effect over the full 9 week trial period was observed for 15% (w/w) calcium diglyceroxide in powder form.

**TABLE 40 - Treatment with calcium diglyceroxide granules over 9 weeks**

| **Week** | **No treatment** | | | | **15% (w/w) Ca-DGO granules** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 4700 | 1700 | 40 | 7.22 | 180 | <10 | <10 | 11.53 |
| **1** | 2.10E+08 | 1.14E+07 | 1.24E+06 | 6.55 | 150 | <10 | <10 | 11.35 |
| **2** | 7.30E+07 | 5.50E+07 | 1.14E+06 | 7.39 | N/A | <10 | <10 | 6.61 |
| **3** | N/A | N/A | N/A | N/A | N/A | <10 | <10 | 8.03 |
| **4** | N/A | N/A | N/A | N/A | 70 | <10 | <10 | 8.54 |
| **5** | N/A | N/A | N/A | N/A | 650 | 30 | <10 | 7.20 |
| **6** | N/A | N/A | N/A | N/A | 120 | <10 | <10 | 9.25 |
| **7** | N/A | N/A | N/A | N/A | 700 | <10 | <10 | 7.21 |
| **8** | N/A | N/A | N/A | N/A | 270 | <10 | <10 | 9.17 |
| **9** | N/A | N/A | N/A | N/A | 150 | <10 | <10 | 8.95 |
| | | | | | | | | |

| **Week** | **No treatment** | | | | **10% (w/w) Ca-DGO granules** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 4700 | 1700 | 40 | 7.22 | 80 | <10 | <10 | 10.2 |
| **1** | 2.10E+08 | 1.14E+07 | 1.24E+06 | 6.55 | 510 | <10 | <10 | 9.87 |
| **2** | 7.30E+07 | 5.50E+07 | 1.14E+06 | 7.39 | 3500 | <10 | <10 | 7.09 |
| **3** | N/A | N/A | N/A | N/A | N/A | <10 | <10 | 7.90 |
| **4** | N/A | N/A | N/A | N/A | 30 | <10 | <10 | 8.89 |
| **5** | N/A | N/A | N/A | N/A | N/A | 100 | <10 | 6.83 |
| **6** | N/A | N/A | N/A | N/A | 5400 | <10 | <10 | 8.93 |
| **7** | N/A | N/A | N/A | N/A | N/A | <10 | 400 | 7.24 |
| **8** | N/A | N/A | N/A | N/A | 410000 | <10 | 250 | 8.63 |
| **9** | N/A | N/A | N/A | N/A | 480000 | <10 | <10 | 8.96 |

| | | | | | | | | |
|---|---|---|---|---|---|---|---|---|
| *colony forming units (cfu)/gram ** 1% (w/w) in distilled water | | | | | | | | |

### Conclusions

A substantial but slightly less effective initial sterilisation effect than that achieved with 15% (w/w) granules (Table 39) was achieved using calcium diglyceroxide granules at dose levels of 10% and 15% (w/w), respectively. A similar subsequent preservation effect over the full 9 week trial period was observed with 15% (w/w) calcium diglyceroxide in granule form, whereas the granules at 10% (w/w) was effective for a shorter period of *ca* 7 weeks.

**TABLE 41 - Treatment with a 1:1 mixture of calcium diglyceroxide powder and granules over 9 weeks**

| **Week** | **No treatment** | | | | **15% (w/w) Ca-DGO powder + granules (1:1)** | | | |
|---|---|---|---|---|---|---|---|---|
| | **Total plate count*** | **Yeast Count*** | **Mould Count*** | **pH**** | **Total plate count*** | **Yeast Count*** | **Mould Count*** | **pH**** |
| **0** | 4700 | 1700 | 40 | 7.22 | 540 | | | |
| **1** | 2.10E+08 | 1.14E+07 | 1.24E+06 | 6.55 | 50 | <10 | <10 | 11.47 |
| **2** | 7.30E+07 | 5.50E+07 | 1.14E+06 | 7.39 | 710 | <10 | <10 | 7.57 |
| **3** | N/A | N/A | N/A | N/A | 70 | <10 | <10 | 7.88 |
| **4** | N/A | N/A | N/A | N/A | <10 | <10 | <10 | 9.29 |
| **5** | N/A | N/A | N/A | N/A | N/A | 20 | <10 | 6.78 |
| **6** | N/A | N/A | N/A | N/A | 150 | <10 | <10 | 9.27 |
| **7** | N/A | N/A | N/A | N/A | 660 | <10 | <10 | 7.23 |
| **8** | N/A | N/A | N/A | N/A | 4200 | <10 | <10 | 9.18 |
| **9** | N/A | N/A | N/A | N/A | 45000 | <10 | <10 I | 8.93 |

| | | | | | | | | |
|---|---|---|---|---|---|---|---|---|
| *colony forming units (cfu)/gram ** 1% (w/w) in distilled water | | | | | | | | |

### Conclusions

The use of calcium diglyceroxide as a mixture of powder and granules in a 1:1 ratio did not result in either a superior initial sterilisation effect or a superior long-term preservation effect compared to treatment with the substance in either powder (Table 39) or granule (Table 40) form at the same dose level of 15% (w/w).

The microbial count results obtained for the treatment of wet distiller's grains residues with and without a prior de-watering step, respectively, with calcium oxide, calcium hydroxide and calcium diglyceroxide in powder or granule form at various dose levels are summarised in Tables 42 and 43.

**TABLE 42 - Treatment agent/dose versus minimum preservation time of partially dewatered wet distiller's grains in Example 2 with total microbial counts of test samples below 1000, and 60 colony forming units (cfu) per gram, respectively**

| **Treatment agent** | **Dose (% w/w)** | **<1000 cfu/g*** | **<60 cfu/g*** |
|---|---|---|---|
| None | N/A | N/A | N/A |
| CaO powder | 10 | ≥1 year | 2 weeks |

| | | | |
|---|---|---|---|
| *colony forming units (cfu)/gram | | | |

**TABLE 43 - Treatment agent/dose versus preservation times of distiller's grains not subjected to a prior de-watering step in Examples 8-10 with total microbial counts of test samples below 1000, 100 and 10 colony forming units (cfu) per gram**

| **Treatment agent** | **Dose (% w/w)** | **<1000 cfu/g*** | **<100 cfu/g*** | **<10 cfu/g*** |
|---|---|---|---|---|
| None | N/A | N/A | N/A | N/A |
| Ca-DGO (p)** | 10% | ≥3 weeks | ≥2 weeks | N/A |
| Ca-DGO (g)*** | 10% | ≥4 weeks | ≥4 weeks | N/A |
| Ca-DGO (p)** | 15% | ≥9 weeks | ≥9 weeks | ≥9 weeks |
| Ca-DGO (g)** | 15% | ≥9 weeks | ≥9 weeks | N/A |
| CaO | 5% | ≥9 weeks | ≥9 weeks | ≥9 weeks |
| CaO | 10% | ≥9 weeks | ≥9 weeks | ≥9 weeks |
| Ca(OH)₂ | 3.3% | ≥6 weeks | ≥6 weeks | ≥6 weeks |
| Ca(OH)₂ | 6.6% | ≥6 weeks | ≥6 weeks | ≥6 weeks |

| | | | | |
|---|---|---|---|---|
| * cfu/g = colony forming units (cfu) per gram of test sample ** Ca-DGO (p) = calcium diglyceroxide powder ***Ca-DGO (g) = calcium diglyceroxide granules | | | | |

### Example 11

### Sterilisation of animal bedding materials

Animal bedding and litter materials were sterilised with calcium glyceroxide and calcium hydroxide. In different embodiments of the invention the calcium glyceroxide in aqueous solution was sprayed onto the bedding or litter material to sterilise it (as shown for calcium hydroxide and calcium diglyceroxide, respectively, in aqueous medium against representative pathogenic bacteria *i.e.* E.Coli, Salmonella abony and Clostridium difficile in Examples 4-6) or the calcium hydroxide or glyceroxide was mixed into the bedding material to provide a sterilisation and sustained release preservation effect (as shown for wet grains in Examples 2-3 and Examples 7-10) and could be "topped up" by dusting over the bedding material as required.

The weight ratio between the solid treatment agent and the substrate was between 1:5 and 1:100 in different embodiments of the invention. The concentration of the liquid formulation was between 1% and 100% of the maximum solubility of the solid substance in water at 5 to 25 degrees Celsius in other embodiments.

The solubility of calcium diglyceroxide is about 8.35 gram per liter (0.037 molar) in water at *ca* 20 degrees Celsius. The concentration of the calcium diglyceroxide in water of the liquid formulation could therefore be between 0.05 gram per liter (0.00037 molar) and 5 gram per liter (0.037 Molar) at 20 degrees Celsius.

### Example 12

### Treatment of fish and fish products such as fishmeal

Fish was sterilised by using calcium hydroxide and calcium diglyceroxide. In an embodiment of the invention the fish was sprayed with a solution of calcium hydroxide provide a sterilisation and preservation effect (as shown for, respectively, in aqueous medium against representative pathogenic bacteria i.e. E.Coli, Salmonella abony and Clostridium difficile in Examples 4-6).

Fishmeal and fish products were sterilised using calcium glyceroxide or calcium hydroxide. In different embodiments fishmeal was mixed with calcium hydroxide or calcium glyceroxide in solid form during or soon after production to provide a sterilization and sustained release preservation effect (as shown for wet grains in Examples 2-3 and Examples 7-10). The Applicant has found that it easy for feed and meal plants to handle solid treatment agents such as calcium glyceroxide powders or granules as no additional investment is required.

A further benefit of the solid formulations is the ongoing protection of the finished feed product against harmful bacteria and fungal infections which give rise to the formation of mycotoxin production due to the demonstrated slow release of anti-microbial active from for example calcium diglyceroxide granules over time (Examples 7-10).

The weight ratio between the solid treatment agent and the substrate in different embodiments of the invention was between about 1:5 and 1:100.

The solubility of calcium diglyceroxide is about 8.35 gram per liter (0.037 molar) in water at *ca* 20 degrees Celsius. The concentration of the calcium diglyceroxide in water of the liquid formulation could therefore be between 0.05 gram per liter (0.00037 molar) and 5 gram per liter (0.037 Molar) at 20 degrees Celsius.

### Example 13

### Treatment of meat products and carcasses

Carcasses and meat product at the final wash stage were, in different embodiments of the invention, treated by spraying with a solution of calcium hydroxide or calcium diglyceroxide in water to provide a sterilisation and preservation effect (as shown for calcium hydroxide and calcium diglyceroxide, respectively, in aqueous medium against representative pathogenic bacteria *i.e.* E.Coli, Salmonella abony and Clostridium difficile in Examples 4-6). The treatment was found to be safe and unlike chlorine-based products was not light-sensitive and did not form carcinogenic byproducts when in contact with organic matter.

The weight ratio between the calcium hydroxide or calcium diglyceroxide and the substrate was between about 1:5 and 1:100. The solubility of calcium diglyceroxide is about 8.35 gram per liter (0.037 molar) in water at *ca* 20 degrees Celsius. The concentration of the calcium diglyceroxide in water of the liquid formulation could therefore be between 0.05 gram per liter (0.00037 molar) and 5 gram per liter (0.037 Molar) at 20 degrees Celsius.

It is an advantage of the invention illustrated that the method of the invention results in a substantial reduction in the rate of degradation of fermentation residues and effectively sanitises the residue. This reduction is believed to be caused primarily by the generation of a reservoir of anions with anti-microbial properties resulting for example from the addition of calcium glyceroxides which provides glyceroxyl ions as an effective anti-microbial agent. The effect appears to be enhanced by the partial removal of water, i.e. the secondary mode of preservation which also pertains to air-drying of the preserved material over time. The secondary mode of preservation *i.e.* the additional shelf life enhancement following primary chemical action may explain the longer than expected observed preservation effect that could be expected to be ascribed to chemical treatment only. Thus, the primary chemical sterilisation at the early stages of the trial is believed to be enhanced by a secondary preservation effect through mechanical air-drying of wet biomaterials over time which creates a hostile environment for microorganisms. The secondary drying effect can be compared to heat drying, however it is expected that heat-dried material would be subject to degradation through microbial action when exposed to moisture, whereas the chemically treated material is self-sterilising due the presence of the preservative and would be expected to be much more stable than a similar heat-dried material when exposure to moisture for example during storage or transportation.

Another advantage of the invention is the demonstrated sustained release effect of the preservative such as calcium diglyceroxide in granular form which leads to an enhanced preservation effect and hence shelf life compared to the same substance at the same dose in fine, powder form. The Applicant believes that in the case of the granular dosage form the active biocide such as the glyceroxide ions are released slowly over time where and when the material and thus the granules are exposed to water i.e. anti-microbial action where and when required due to increased microbial levels at these locations and times, which explains the demonstrated superior preservation compared to the powder (Example 9).

It is a further advantage of the invention illustrated that the method of the invention produces an added-value material in an energy-saving and cost-effective manner. The treatment also reduces the requirement for, and potential damage caused by downstream heat drying. The loss of moisture and the elevated pH deprives degradation-causing organisms of a suitable environment in which to live and multiply. Any pockets of unreacted oxide will act as water scavengers and help to maintain a reservoir for slow release of anti-microbial glyceroxyl anions over time. Increase in moisture is expected to increase microbial growth, but will on the other hand also facilitate the solubilisation of glyceroxide releasing glyceroxyl ions and hence increase the dose of available biocide (glyceroxyl ions) where and when most needed (sustained release effect).

It is an added advantage of the mild procedure of the invention, as opposed to conventional heat drying, that the low temperature reduces heat degradation of nutrients and minimises detrimental effects on the nutrients through, for example, the Maillard reaction. It is a further advantage of the invention that through destruction of fungi the levels of various mycotoxins produced by these organisms are reduced or eliminated. The base treatment has been demonstrated to kill pathogenic bacteria such as Salmonella abony, Clostridium species, Escherichia coli, and the like and may deactivate mycotoxins such as fumonisins. The reduction in the amount of available free moisture in which microorganisms can multiply, the presence of glyceroxide and the slow release of glyceroxide due to the relatively low solubility of calcium glyceroxides all appear to enhance the shelf life of the material.

## Claims

1. A method selected from sterilising, preserving or both sterilising and preserving a substrate, the method including the step of exposing the substrate to a composition which includes components selected from one or more calcium glyceroxides.

2. A method as claimed in claim 1, in which the components are selected from calcium monoglyceroxide, calcium diglyceroxide, a higher glyceroxide and mixtures thereof.

3. A method as claimed in claim 1 or claim 2, in which the composition is in a form selected from granules, powders, mixtures thereof, aqueous solutions, alcoholic solutions, aqueous alcoholic solutions and suspensions.

4. A method as claimed in any one of claims 1-3 inclusive, in which the substrate is selected from particulate, fibrous or solid materials.

5. A method as claimed in claim 4, in which the substrate is selected from fermentation residues, animal carcasses, fish meal products, wood chips and animal bedding material.

6. A method as claimed in any one of claims 1 to 5 inclusive, in which exposing the substrate is selected from spraying, dipping and painting.

7. A method as claimed in any one of claims 1 to 6 inclusive, in which the weight ratio between the composition and the substrate is between about 1:5 and 1:100.

8. A method as claimed in any one of claims 1 to 7 inclusive, in which the composition is in a form selected from aqueous solutions, alcoholic solutions and aqueous alcoholic solutions and the amount of the component in the solution is between 1% and 100% of the maximum solubility of the component in the solution.

9. A method as claimed in any one of claims 5 to 8 inclusive, in which the substrate is an animal feedstuff and the method results in reducing or eliminating mycotoxins by chemical destruction of mycotoxins in the feedstuff, by inhibiting or eliminating the formation of mycotoxin-producing fungi in the feedstuff and combinations thereof.

## Patentansprüche

1. Verfahren, das aus Sterilisieren, Konservieren oder sowohl Sterilisieren als auch Konservieren eines Substrats ausgewählt ist, wobei das Verfahren den Schritt des Exponierens des Substrats gegenüber einer Zusammensetzung umfasst, die Komponenten umfasst, die aus einem oder mehreren Calciumglyceroxiden ausgewählt sind.

2. Verfahren gemäß Anspruch 1, bei dem die Komponenten aus Calciummonoglyceroxid, Calciumdiglyceroxid, einem höheren Glyceroxid und Mischungen davon ausgewählt sind.

3. Verfahren gemäß Anspruch 1 oder Anspruch 2, bei dem die Zusammensetzung in einer Form ist, die aus Granulaten, Pulver, Mischungen davon, wässrigen Lösungen, alkoholischen Lösungen, wässrig-alkoholischen Lösungen und Suspensionen ausgewählt ist.

4. Verfahren gemäß einem der Ansprüche 1-3 inklusive, bei dem das Substrat aus partikulären, fasrigen oder festen Materialien ausgewählt ist.

5. Verfahren gemäß Anspruch 4, bei dem das Substrat aus Gärresten, Tierkörpern, Fischmehlprodukten, Holzschnitzel und Tiereinstreumaterial ausgewählt ist.

6. Verfahren gemäß einem der Ansprüche 1 bis 5 inklusive, bei dem das Exponieren des Substrats aus Spritzen, Tauchen und Streichen ausgewählt ist.

7. Verfahren gemäß einem der Ansprüche 1 bis 6 inklusive, bei dem das Gewichtsverhältnis zwischen der Zusammensetzung und dem Substrat zwischen etwa 1:5 und 1:100 liegt.

8. Verfahren gemäß einem der Ansprüche 1 bis 7 inklusive, bei dem die Zusammensetzung in einer Form ist, die aus wässrigen Lösungen, alkoholischen Lösungen und wässrig-alkoholischen Lösungen ausgewählt ist und die Menge der Komponente in der Lösung zwischen 1 % und 100 % der maximalen Lösbarkeit der Komponente in der Lösung liegt.

9. Verfahren gemäß einem der Ansprüche 5 bis 8 inklusive, bei dem das Substrat ein Tierfuttermittel ist und das Verfahren im Reduzieren oder Eliminieren von Mykotoxinen durch chemische Zerstörung von Mykotoxinen im Futtermittel, durch Hemmen oder Eliminieren der Bildung von Mykotoxin produzierenden Pilzen im Futtermittel und Kombinationen davon, resultiert.

## Revendications

1. Un procédé sélectionné parmi stérilisation, conservation ou à la fois stérilisation et conservation d'un substrat, le procédé comprenant l'opération d'exposition du substrat à une composition qui contient des composants sélectionnés parmi un ou plusieurs glycéroxydes de calcium.

2. Un procédé selon la Revendication 1, dans lequel les composants sont sélectionnés parmi monoglycéroxyde de calcium, diglycéroxyde de calcium, un glycéroxyde plus élevé, et des mélanges de ceux-ci.

3. Un procédé selon la Revendication 1 ou 2, dans lequel la composition se présente sous une forme sélectionnée parmi granules, poudres, des mélanges de ceux-ci, solutions aqueuses, solutions alcooliques, solutions alcooliques aqueuses et suspensions.

4. Un procédé selon l'une quelconque des Revendications 1 à 3, dans lequel le substrat est sélectionné parmi matériaux particulaires, fibreux ou solides.

5. Un procédé selon la Revendication 4, dans lequel le substrat est sélectionné parmi résidus de fermentation, carcasses animales, produits de farine de poisson, copeaux de bois et matériau de litière animale.

6. Un procédé selon l'une quelconque des Revendications 1 à 5, dans lequel l'exposition du substrat est sélectionnée parmi pulvérisation, trempage et peinture.

7. Un procédé selon l'une quelconque des Revendications 1 à 6, dans lequel le rapport de poids entre la composition et le substrat se situe entre environ 1:5 et 1:100.

8. Un procédé selon l'une quelconque des Revendications 1 à 7, dans lequel la composition se présente sous une forme sélectionnée parmi solutions aqueuses, solutions alcooliques et solutions alcooliques aqueuses, et la quantité du composant dans la solution se situe entre 1% et 100% de la solubilité maximale du composant dans la solution.

9. Un procédé selon l'une quelconque des Revendications 5 à 8, dans lequel le substrat est un aliment pour animaux et le procédé résulte en la réduction ou l'élimination de mycotoxines par la destruction chimique des mycotoxines dans l'aliment pour animaux, par l'inhibition ou l'élimination de la formation de champignons produisant des mycotoxines dans l'aliment pour animaux, et des combinaisons de ces opérations.
